# NEUE EUROPÄISCHE PATENTSCHRIFT

(11) **EP 3 450 643 B2**
(45) Veröffentlichungstag und Bekanntmachung des Hinweises auf die Entscheidung über den Einspruch: **03.04.2024**
(45) Hinweis auf die Patenterteilung: 19.05.2021
(21) Anmeldenummer: 18187766.3
(22) Anmeldetag: 07.08.2018
(51) Int. Cl.: E04B 1/68, E06B 1/62

(54) **DICHTBANDROLLE**
SEALING TAPE ROLL
ROULEAU DE BANDE D'ÉTANCHÉITÉ

(30) Priorität: 01.09.2017 EP 17189098
(43) Veröffentlichungstag der Anmeldung: 06.03.2019
(73) Patentinhaber: ISO-Chemie GmbH, 73431 Aalen (DE)
(72) Erfinder:
(74) Vertreter: Wächter, Jochen

(56) Entgegenhaltungen:
- EP-A1- 2 990 552
- DE-U1-202011 000 091
- DE-U1-202012 005 049
- DE-U1-202013 100 308

## Beschreibung

Die vorliegende Erfindung betrifft eine Dichtbandrolle aus weichem, komprimierbarem Schaumstoff mit mindestens zwei in radialer Richtung verlaufenden Sperrschichten.

Von Dichtbandrollen abgewickelte Dichtbänder werden üblicherweise zum Abdichten von Fugen, beispielsweise zwischen einem Rahmenprofil eines Fensters oder einer Tür und einer Gebäudewand verwendet, um die Fugen gegen Luftzug und Schlagregen abzudichten. Zusätzlich vorgesehene Folien an einer Seitenfläche des Dichtbands erhöhen zudem die Dampfundurchlässigkeit desselben, siehe z.B. EP 0 072 955 A1 oder EP 1 936 246 A1. Da diese Folien, die außen am Dichtband angebracht sind, den Nachteil aufweisen, dass sie beim Transport oder Einbau des Dichtbands beschädigt werden können, ist man dazu übergegangen, die eine Sperrschicht bildenden Folien innerhalb eines Dichtbands anzuordnen.

Zum Herstellen von Dichtbändern mit innenliegenden Sperrschichten sind verschiedene Verfahren bekannt, bei denen Folien oder ähnliche eine Sperrschicht bildende Materialien in ein Dichtband eingebracht werden. Beispielsweise beschreibt die EP 2 990 553 A1 ein Verfahren, bei dem mindestens zwei Schaumstoffstreifen bereitgestellt werden. Einer der Schaumstoffstreifen ist an einer seiner Seitenflanken mit einem Folienstreifen, einem Klebebandstreifen oder einem klebstoffartigen flüssigen Medium versehen. Die beiden Schaumstoffstreifen werden anschließend derart zusammengeführt, dass eine Schaumstoff-Sperrschicht-Bahn entsteht, bei der eine aus dem Folienstreifen, dem Klebebandstreifen oder dem klebstoffartigen flüssigen Medium hervorgegangene Sperrschicht zwischen aneinandergrenzenden Schaumstoffstreifen angeordnet ist. Bei diesem Verfahren hat es sich als nachteilig erwiesen, dass mit dem Bereitstellen einzelner Schaumstoffstreifen, die mit einem Sperrschicht-Material versehen sind, ein verhältnismäßig großer Aufwand verbunden ist. Dieser Aufwand nimmt entsprechend zu, je mehr Sperrschichten das Dichtband aufweisen soll.

Die EP 2 990 551 A1 beschreibt ein alternatives Verfahren zur Herstellung von Dichtbandrollen mit einer innenliegenden Sperrschicht. Bei diesem wird zunächst eine Schaumstoffbahn bereitgestellt. Anschließend wird in die Schaumstoffbahn in Längsrichtung eine Mehrzahl von Schnitten eingebracht, um parallel verlaufende Schaumstoffstreifen zu bilden. In jeden durch die Schnitte erzeugten Zwischenraum zwischen zwei benachbarten Schaumstoffstreifen wird dann ein Folienstreifen, ein Klebebandstreifen oder ein klebstoffartiges flüssiges Medium eingebracht. Alle Schaumstoffstreifen werden zur Herstellung einer Schaumstoff-Sperrschicht-Bahn, bei der sich die Schaumstoffstreifen und die mindestens eine Sperrschicht abwechseln, verbunden. Dabei ist es mitunter schwierig, das Sperrschicht-Material in die sehr engen Zwischenräume zuverlässig einzubringen und sicherzustellen, dass das Material gleichmäßig über die gesamte Höhe der Schaumstoffbahn bzw. der Schaumstoffstreifen verteilt ist. Eine Kontrolle der eingebrachten Sperrschicht nach dem Einbringen des Materials ist nur schwer möglich. Zudem müssen aufwändige Umlenkeinrichtungen vorgesehen werden, um beispielsweise einen Folienstreifen in einen durch einen Schnitt gebildeten Zwischenraum einzubringen.

Die EP 2 990 552 A1 offenbart ein Verfahren zur Herstellung einer Dichtbandrolle, bei dem zwei oder mehr Schaumstoffstreifen, von denen zumindest einer auf einer Seitenfläche mit einem Sperrschichtmaterial versehen ist, derart zusammengeführt werden, dass das Sperrschichtmaterial zwischen zwei benachbarten Schaumstoffstreifen angeordnet ist. Die Schaumstoffstreifen werden dann ausschließlich mittels einer zusätzlichen Verbindungsschicht verbunden, die auf zwei nach außen gewandte, in einer Ebene liegende Seitenflächen der Streifen aufgebracht wird, sodass sie sich senkrecht zum Sperrschichtmaterial erstreckt.

Der vorliegenden Erfindung liegt die Aufgabe zugrunde, eine Dichtbandrolle mit mindestens zwei innentiegenden, radial ausgerichteten Sperrschichten bereitzustellen, die einfach, kostengünstig und zuverlässig herstellbar ist.

Diese Aufgabe wird durch die Merkmale des Anspruchs 1 gelöst. Bevorzugte Ausführungsformen sind Gegenstand der Unteransprüche.

Eine erfindungsgemäße Dichtbandrolle ist aus weichem, komprimierbarem Schaumstoff mit mindestens zwei in radialer Richtung verlaufenden Sperrschichten, die axial zwischen zwei Schichten aus Schaumstoff angeordnet sind, und besteht aus einem zur Dichtbandrolle aufgewickelten Dichtelement. Das Dichtelement umfasst eine Oberseite, eine Unterseite und zwei die Oberseite und die Unterseite verbindende Seitenflanken sowie mindestens drei Dichtbandabschnitte, die in einer Funktionsrichtung des Dichtelements nebeneinander angeordnet sind, wobei sich die Funktionsrichtung parallel zur Unterseite sowie im Wesentlichen senkrecht zu den Seitenflanken des Dichtelements erstreckt. Die Funktionsrichtung ist auch senkrecht zur Längsrichtung des Dichtelements ausgerichtet, wobei sich die Längsrichtung parallel zur Unterseite und parallel zu den Seitenflanken des Dichtelements erstreckt. Die mindestens drei Dichtbandabschnitte sind in der Dichtbandrolle axial nebeneinander angeordnet. Das Dichtelement umfasst ferner mindestens einen ersten Sperrschichtabschnitt und mindestens einen zweiten Sperrschichtabschnitt, die jeweils zwischen zwei aneinander angrenzenden Dichtbandabschnitten aufgenommen sind und parallel zu den Seitenflanken im Dichtelement verlaufen. Das Dichtelement ist um eine Achse, die sich parallel zur Funktionsrichtung des Dichtelements erstreckt, zur Dichtbandrolle aufgewickelt. Die Seitenflanken des Dichtelements bilden Stirnflächen der Dichtbandrolle. Folglich sind der erste Sperrschichtabschnitt und der zweite Sperrschichtabschnitt in der Dichtbandrolle parallel zu den Stirnflächen der Dichtbandrolle angeordnet. Der mindestens eine erste Sperrschichtabschnitt weist zwei Schenkel auf, die miteinander verbunden sind. Auch der mindestens eine zweite Sperrschichtabschnitt weist zwei Schenkel auf, die miteinander verbunden sind. Die Schenkel des mindestens einen ersten Sperrschichtabschnitts sind im Bereich der Unterseite des Dichtelements miteinander verbunden und die Schenkel des mindestens einen zweiten Sperrschichtabschnitts sind im Bereich der Oberseite des Dichtelements miteinander verbunden.

Auf diese Weise wird ein Dichtelement, vorzugsweise in Form eines Dichtbands bereitgestellt, das sich besonders einfach und kostengünstig herstellen lässt. Dies liegt vor allem darin begründet, dass ein Sperrschichtmaterial einfach, effizient und gut kontrollierbar auf eine Oberfläche einer großflächigen Schaumstoffbahn aufgebracht werden und im Anschluss durch Einschneiden der Schaumstoffbahn und Umklappen einzelner Streifen im Inneren einer Schaumstoff-Sperrschicht-Bahn angeordnet werden kann. Ein aufwändiges und schwer kontrollierbare Einbringen von Sperrschichtmaterial in Einschnitte eines Dichtbands oder das Vorbereiten einer Vielzahl von teilweise mit einem Sperrschichtmaterial versehenen Schaumstoffstreifen ist zur Herstellung der erfindungsgemäßen Dichtbandrolle nicht erforderlich. Auch eine Schaumstoff-Sperrschicht-Bahn mit einer Vielzahl von Schaumstoffstreifen und Sperrschichten kann auf diese Weise einfach hergestellt werden, wie sich aus der nachfolgenden Beschreibung unter Bezugnahme auf die Figuren ergibt.

Dichtbandrollen weisen ferner die Vorteile einer platzsparenden Lagerung, einer guten Transportierbarkeit und Handhabung von Dichtelementen bzw. Dichtbändern auf. Das Dichtelement ist dabei bevorzugt komprimiert zur Dichtbandrolle aufgewickelt. Die komprimierte Dicke eines Dichtelements in der erfindungsgemäßen Dichtbandrolle beträgt weniger als 25% der Schaumstoffausgangshöhe. In bevorzugten Ausführungsformen weist das Dichtelement eine komprimierte Dicke von weniger als 20%, noch mehr bevorzugt weniger als 15% und/oder höher als 5% der Schaumstoffausgangshöhe auf.

Das Dichtelement weist vorzugsweise in einem expandierten Zustand einen im Wesentlichen rechteckigen Querschnitt auf. Eine Breite des Dichtelements ist zwischen den Seitenflanken des Dichtelements definiert, eine Höhe des Dichtelements ist zwischen der Oberseite und der Unterseite des Dichtelements definiert und eine Länge des Dichtelements ist in Richtung der Längsrichtung definiert. Die Ober- und die Unterseite bilden im Querschnitt senkrecht zur Längsrichtung Breitseiten des Dichtelements und die Seitenflanken bilden in diesem Querschnitt Schmalseiten des Dichtelements. Es ist bevorzugt, dass sich das Dichtelement wesentlich weiter in seiner Länge als in seiner Breite und seiner Höhe erstreckt. In diesem Fall ist regelmäßig von einem Dichtband die Rede. Da die Seitenflanken des Dichtelements die Stirnflächen der Dichtbandrolle bilden, entspricht eine Breite der Dichtbandrolle im Wesentlichen der Breite des Dichtbands. Geringe Abweichungen können sich dadurch ergeben, dass sich die Seitenflanken im zur Dichtbandrolle aufgewickelten komprimierten Zustand geringfügig nach außen wölben.

Ein Einbauzustand des Dichtelements bzw. eines entsprechenden Dichtbands ist als der Zustand definiert, in dem das Dichtelement in einer Fuge zwischen einem Rahmenelement, z.B. einem Fenster- oder Türrahmen, und einer Gebäudemauer angeordnet ist. Dabei erstreckt sich die Längsrichtung des Dichtelements entlang der umlaufenden Fuge und das Dichtelement liegt flächig mit der Unterseite und der Oberseite an dem Rahmenelement und an der Gebäudemauer an. Eine Seitenflanke des Dichtelements ist einer Rauminnenseite und die gegenüberliegende Seitenflanke einer Raumaußenseite zugewandt. Eine Funktionsrichtung des Dichtelements erstreckt sich parallel zur Unterseite des Dichtelements von der Rauminnenseite zur Raumaußenseite und, im Falle eines rechteckigen Dichtelements, senkrecht zu den Seitenflanken des Dichtelements. Die Funktionsrichtung ist somit senkrecht zur Längsrichtung des Dichtbands ausgerichtet.

Der mindestens eine erste Sperrschichtabschnitt und der mindestens eine zweite Sperrschichtabschnitt erstrecken sich erfindungsgemäß einer Ebene parallel zur Längsrichtung des Dichtelements sowie quer zur Funktionsrichtung und quer zur Längsrichtung des Dichtelements. Die Sperrschichtabschnitte verlaufen folglich im Einbauzustand entlang der umlaufenden Fuge und über einen Großteil des Fugenquerschnitts in einer Ebene zwischen dem Rahmenelement und dem Mauerwerk. Eine Wasserdampfdiffusion durch das Dichtelement in Funktionsrichtung ist daher im Wesentlichen nur durch die Sperrschichtabschnitte möglich.

In einer möglichen Ausführungsform kann das Dichtelement auch Sperrschichten aufweisen, die parallel zur Funktionsrichtung und in Längsrichtung des Dichtelements verlaufen und/oder Sperrschichten aufweisen, die parallel zur Funktionsrichtung und quer zur Längsrichtung verlaufen. Solche Sperrschichten unterteilen das Dichtelement in kleinere Abschnitte, zwischen denen eine Wasserdampfdiffusion innerhalb des Dichtelements nur in dem Umfang möglich ist, in dem es die jeweiligen Sperrschichten erlauben. Inhomogenitäten des Schaumstoffs, eine Wasserdampfdiffusion innerhalb des Dichtelements hin zu Bereichen geringeren Wasserdampfdiffusionswiderstands bewirken können und sich nachteilig auf die Wasserdampfdurchlässigkeit des Dichtelements auswirken, können sich dadurch nur lokal begrenzt auf den jeweils kleinen Abschnitt des Dichtelements auswirken.

In einer Ausführungsform weist das Dichtelement weiterhin eine Drainageschicht zum Erfassen und zielgerichteten Ableiten von Wasser aus dem Dichtelement auf. Wasser, das beispielsweise durch Schlagregen unerwünscht in das Dichtelement gelangt, kann dadurch wieder aus dem Dichtelement abgeleitet werden. Ein feuchtes Dichtelement bzw. Dichtband würde nachteilig zu einer Erhöhung der Wärmeleitfähigkeit und entsprechend zu einer niedrigeren Wärmedämmung durch das Dichtelement führen. Die Drainageschicht kann einen Schaumstoffstreifen umfassen oder durch eine Sperrschicht, vorzugsweise durch einen parallel zu den Seitenflanken des Dichtelements verlaufenden Sperrschichtabschnitt gebildet werden. Eine Sperrschicht kann beispielsweise mehrlagig ausgebildet sein, wobei eine Lage eine Drainageschicht bildet, die dazu geeignet ist, eindringendes Wasser abzuleiten. Die Drainageschicht kann z.B. eine Membran und/oder Vliesschicht aufweisen. Ist die Drainageschicht aus einem Schaumstoff gebildet, umfasst das Dichtband beispielsweise zumindest drei nebeneinander angeordnete Dichtbandabschnitte, von denen zumindest einer, vorzugsweise ein innerer Dichtbandabschnitt als Drainageschicht ausgebildet ist. Die Drainageschicht weist dann einen zumindest überwiegend offenzelligen Schaumstoff auf, der Wasser aufnehmen und der Schwerkraft folgend durch die offenen Poren ableiten kann. Durch die Verwendung eines Schaumstoffs werden zugleich die dämmenden Eigenschaften des Dichtelements kaum negativ beeinflusst. Zusätzlich kann die Drainageschicht auch hier eine Vliesschicht aufweisen.

In einer besonders bevorzugten Ausführungsform weist das Dichtelement mehrere erste und/oder mehrere zweite Sperrschichtabschnitte auf, wobei sich in Funktionsrichtung betrachtet immer ein erster Sperrschichtabschnitt und ein zweiter Sperrschichtabschnitt abwechseln. Dadurch ist das Dichtelement noch leichter herstellbar und kann einen im Wesentlichen rechteckigen Querschnitt mit einer ebenen Unterseite und einer ebenen Oberseite aufweisen.

Es ist bevorzugt, dass der mindestens eine erste Sperrschichtabschnitt und der mindestens eine zweite Sperrschichtabschnitt eine Folie aufweisen. Der mindestens eine erste Sperrschichtabschnitt und der mindestens eine zweite Sperrschichtabschnitt können aber auch andere Materialien, insbesondere einen Klebstoff aufweisen.

Besonders bevorzugt sind die hierin beschriebenen Sperrschichten bzw. Sperrschichtabschnitte aus einem folienartigen Material oder einem Klebstoff, insbesondere aus einem Folienstreifen, einem Klebebandstreifen oder einem klebstoffartigen flüssigen Medium gebildet. Solche Sperrschichtmaterialien lassen sich besonders einfach und gut kontrollierbar auf den Schaumstoff des Dichtbands aufbringen und mit diesem verbinden. Zudem eignen sich diese Materialien besonders gut als Sperrschichtmaterial, da sich ihre Dichteigenschaften gezielt einstellen lassen.

Beispielsweise sind die hierin beschriebenen Sperrschichten aus einem folienartigen Material, z.B. einer Folie aus Polyamid, Polyurethan, Polypropylen, oder Copolymeren davon gebildet. Die hierin beschriebenen Sperrschichten können auch aus einem Klebstoff, z.B. einem Dispersionsklebstoff, insbesondere einem Acrylatklebstoff gebildet sein. Die Sperrschichten können alle aus demselben Material oder aus unterschiedlichen Materialien gebildet sein.

Die Sperrschichten können auch feuchtevariabel ausgebildet sein, d.h. ihr Wasserdampfdiffusionswiderstand ändert sich in Abhängigkeit von der Luftfeuchtigkeit der Umgebung der Sperrschicht. Kennzeichnend für den Wasserdampfdiffusionswiderstand ist der Wasserdampfdiffusionswert bezogen auf eine Luftschichtdicke in Metern, der sogenannte sD-Wert.

Vorzugsweise weist eine Sperrschicht einen sD-Wert von 0,05 m bis 100 m, mehr bevorzugt von 0,1 m bis 25 m oder von 0,2 m bis 15 m auf (bei 25% relativer Luftfeuchtigkeit (rel. LF)). Die Prüfung des sD-Wertes erfolgt nach DIN EN ISO 12572. Unabhängig hiervon oder in Kombination hiermit kann eine Sperrschicht einen sD-Wert von 0,02 m bis 10 m oder 0,03 m bis 6 m oder 0,05 m bis 2 m bei 72,5% rel. LF aufweisen, gemäß DIN EN ISO 12572. Beispielsweise kann der sD-Wert bei 25% rel. LF im Bereich von 1 bis 10 m und bei 72,5% rel. LF im Bereich von 0,1 bis 5 m liegen. Sofern nach DIN EN ISO 12572 nichts anderes bestimmt, beziehen sich die sD-Werte auf eine Temperatur von 20°C.

Der sD-Wert einer Sperrschicht bei 25% einerseits und bei 72,5% relativer Luftfeuchtigkeit andererseits (jeweils bei 20°C) unterscheidet sich vorzugsweise um einen Faktor von ≥ 1,1-1,2, vorzugsweise ≥ 1,5-2, gegebenenfalls bis zu einem Faktor von 3 bis 5 oder bis 10 bis 20 oder auch bis 50 oder bis 100 oder 150 oder darüber hinaus, wodurch die Abhängigkeit der Wasserdampfdiffusion der Sperrschicht von der Luftfeuchtigkeit definiert wird. Die Differenz beider sD-Werte der Sperrschicht bei den beiden angegebenen relativen Luftfeuchtigkeiten kann ≥ 0,25 m oder ≥ 0,5 m oder vorzugsweise ≥ 0,75-1 m betragen, beispielsweise bis zu 5-10 m oder bis zu 20-25 m oder darüber hinaus. Hierdurch ergibt sich bei verschiedenen Umgebungsbedingungen, beispielsweise im Sommer oder Winter oder in unterschiedlichen Klimazonen, eine ausreichende Abhängigkeit des Wasserdampfdiffusionswiderstandes, um auch bei unterschiedlicher relativer Luftfeuchtigkeit der Umgebung eine ausreichende Anpassung des Wasserdampfdiffusionswiderstandes an die Umgebungsbedingungen zu erzielen. Der sD-Wert bei 25% rel. Luftfeuchtigkeit ist hierbei vorzugsweise jeweils der höhere Wert gegenüber dem bei 72,5% Luftfeuchtigkeit.

Vorzugsweise bestehen die Sperrschichten mindestens teilweise aus einem synthetischen, wasserquellbaren Polymer.

Eine Sperrschicht weist eine Dicke von 1 µm bis 1 mm auf, vorzugsweise eine Dicke von 1 bis 500 µm oder 2 bis 250 µm, besonders bevorzugt im Bereich von 5 bis 100 µm oder 5 bis 50 µm.

Die Sperrschichten können auch mehrlagig, insbesondere als eine mehrlagige Verbundschicht ausgebildet sein. Ein- oder beidseitig der Funktionsschicht kann jeweils mindestens eine Lage mindestens eines weiteren Materials angeordnet sein. Die eine oder beiden weiteren Lagen, welche die Funktionsschicht jeweils teilweise oder vollständig bedecken, können diese schützen und tragen bzw. unterstützen und die Stabilität der Sperrschichten erhöhen. Die einzelnen Lagen können jeweils aus gleichem oder verschiedenem Material bestehen.

Die ein- oder beidseitig angeordneten Lagen können insbesondere Vliese, Gewebe oder Gitter aus inerten Stoffen wie Polyethylen, Polyurethan, Polypropylen, Polyester, Glasfasern oder Viskose sein, gegebenenfalls auch perforierte Folien, insbesondere solche aus Polyethylen, Polyurethan, Polypropylen oder Polyester. Die Schichten können allgemein aus jedem geeigneten Material bestehen, welches in Schichtform vorliegt und vorzugsweise keine höheren sD-Werte hat als die Funktionsschicht. Die ein- oder beidseitig angeordneten Lagen können aus einem Dispersionsklebstoff bestehen, insbesondere einem Acrylatkleber.

Die Dicke der die Funktionsschicht umgebenden Schichten der Sperrschichten können insgesamt je Seite unabhängig voneinander eine Dicke von 10-2.000 µm, vorzugsweise 10-500 µm, insbesondere 10-250 µm, besonders bevorzugt 10-90 µm betragen.

Die Sperrschichten bilden allgemein im Rahmen der Erfindung vorzugsweise eine durchgehend, nicht poröse und nicht-perforierte Schicht, besonders bevorzugt ist diese mindestens im Wesentlichen luftundurchlässig. Die Luftdurchlässigkeit der Sperrschichten bzw. Sperrlagen liegt vorzugsweise im Bereich von 0,01-50 l/(m²s), mehr bevorzugt im Bereich von 0,01-20 l/(m²s). Bevorzugt beträgt die Luftdurchlässigkeit ≤ 3-6 l/(m²s) oder vorzugsweise ≤ 1-2 l/(m²s) oder ≤ 0,2-0,5 l/(m²s) oder besonders bevorzugt ≤ 0,1-0,3 l/(m²s) nach DIN EN ISO 9237; Prüffläche 100 cm² bei einem Messdruck (Unterdruck) von 1,0 mbar, Prüfgerät Frank 21443, oder ist nicht mehr messbar.

Entscheidend für die Luftdurchlässigkeit eines Dichtelements ist generell die gesamte Reduktion eines Luftstroms in einer Richtung über den gesamten Querschnitt des Dichtelements. Sind beispielsweise in Funktionsrichtung eines Dichtelements oder Dichtbands eine Mehrzahl von Sperrschichten und Schaumstoffstreifen abwechselnd hintereinander angeordnet, ist die Reduktion des Luftstroms durch all diese Sperrschichten und Schaumstoffstreifen zu berücksichtigen. Die Luftdurchlässigkeit des gesamten Dichtelements bzw. Dichtbands in Funktionsrichtung ist vorzugsweise kleiner als 50 l/(m²s), mehr bevorzugt kleiner als 30 l/(m²s), unter den oben angegebenen Messbedingungen.

In einer Ausführungsform umfasst das Dichtelement bzw. die Dichtbandrolle weiterhin ein Zusatzmaterial, das auf eine Fläche des Dichtelements oder auf die Mehrzahl von Sperrschichten aufgebracht ist oder im Imprägnat enthalten ist. Das Zusatzmaterial kann dem Dichtelement spezielle Eigenschaften verleihen. Als Zusatzmaterial kommen insbesondere Materialien zum Brandschutz (z.B. Blähgraffit, nicht brennbare Festkörper, CO₂-Emitter etc.), Materialien zur Isolierung (z.B. PU-Schaum, Harze, Dichtstoffe, etc.), Materialien zur Abdichtung gegen Feuchte (z.B. hydrophobe oder hydrophile Substanzen, bei Kontakt mit Wasser aufquellende Substanzen, etc.), Materialien zur Schallisolierung, Materialien zur kontrollierten Belüftung (z.B. Katalysatoren, etc.), Materialien für die Hygiene (z.B. Desinfektionsmittel, etc.) und/oder Materialien zur Auslösung der Expansion des Dichtbands (z.B. Treibmittel, Wärmequellen, etc.) in Frage. Dem Fachmann sind hier sowohl bezüglich der Anordnung sowie der Art und Eigenschaften des Zusatzmaterials Alternativen ersichtlich, die zum Erfüllen der jeweiligen Anforderungen einsetzbar sind.

Der Schaumstoff des Dichtelements bzw. Dichtbands kann aus jedem beliebigen offenzelligen oder geschlossenzelligen Weichschaumstoff gebildet sein, zum Beispiel aus Polyurethan, Polyethylen, Polyvinylchlorid oder Polypropylen, und kann für eine verzögerte Rückstellung nach Kompression imprägniert sein. Das Raumgewicht derartiger Weichschaumstoffe liegt zwischen 20 und 200 kg/m³.

Nebeneinanderliegende Dichtbandstreifen oder Dichtbandabschnitte bestehen vorzugsweise aus demselben Material. Alternativ können die Dichtbandabschnitte oder Dichtbandstreifen aus unterschiedlichen Materialien gebildet sein.

Vorzugsweise weist der Weichschaum eine Stauchhärte von mehr als 2 kPa auf. Bevorzugt liegt die Stauchhärte bei mehr als 2,1 kPa, mehr bevorzugt bei mehr als 2,2 kPa, besonders bevorzugt bei mehr als 2,3 kPa. Die Stauchhärte beträgt vorzugsweise weniger als 4 kPa, bevorzugt weniger als 3,8 kPa und mehr bevorzugt weniger als 3,6 kPa. Die Stauchhärte ist ein Maß für die Festigkeit des Schaumstoffes. Die hier angegebenen Werte sind dabei auf eine Kompression von 40% gegenüber der Ausgangshöhe bezogen Die Stauchhärte wird bestimmt nach DIN EN ISO 3386, es wird der CV40 angegeben.

Die Dichtelemente werden vorzugsweise zur verzögerten Rückstellung wenigstens teilweise und bevorzugt vollständig mit einem Imprägniermittel imprägniert. Das Imprägniermittel weist vorzugsweise eine Acrylatdispersion auf. Bei einer vorteilhaften Ausführungsform weist die Acrylatdispersion in homogener Phase dispergierte Acrylatpolymerteilchen auf. Besonders bevorzugt ist der Schaumstoff mit einem Gewichtsanteil an Acrylatdispersion zur verzögerten Rückstellung derart imprägniert, dass das Dichtelement bei 20°C und 50% relativer Luftfeuchtigkeit eine Rückstellung in weniger als 24 Stunden von einem Kompressionsgrad des Dichtbandes von ca. 9% bis 13% bis zum Fugenverschluss aufweist.

Bevorzugt weist ein zur verzögerten Rückstellung imprägnierter Schaumstoff eine Luftdurchlässigkeit in einem Bereich von 50 bis 1.000 l/(m²s), mehr bevorzugt zwischen 60 und 600 l/(m²s) und besonders bevorzugt zwischen 80 und 400 l/(m²s) auf. Die im Rahmen dieser Anmeldung getätigten Angaben zur Luftdurchlässigkeit beziehen sich auf eine Bestimmung unter den Normbedingungen eines 10 mm dicken Schaumstückes (vollständig entspannt) bei einem Messunterdruck von 1,0 bar, Prüffläche 100 cm²; Frank-Gerät 21443; DIN ISO 9237.

In einer bevorzugten Ausführungsform verlaufen die Schenkel des mindestens einen ersten Sperrschichtabschnitts und die Schenkel des mindestens einen zweiten Sperrschichtabschnitts jeweils im Wesentlichen parallel zueinander und jeweils zwei Schenkel eines Sperrschichtabschnitts weisen eine die Schenkel verbindende Krümmung auf. So können die Schenkel durch Umklappen des jeweiligen Sperrschichtabschnitts gebildet werden, wobei nach dem Umklappen die zwei Schenkel eines Sperrschichtabschnitts aneinander flächig anliegen, um ein durchgängiges Dichtelement zu bilden. Die die Schenkel verbindende Krümmung entsteht dabei während des Umklappens der Dichtbandabschnitte durch Falten des jeweiligen Sperrschichtabschnitts.

Die Krümmung kann dann U- oder V-förmig ausgebildet sein. Die U- oder V-Form ergibt sich dabei durch Falten bzw. Knicken des jeweiligen Sperrschichtabschnitts. Der Scheitel einer U- oder V-förmigen Krümmung erstreckt sich entlang einer Geraden, die parallel zur Längsrichtung des Dichtelements ausgerichtet ist. Eine U-Form der Krümmung ergibt sich insbesondere dann, wenn nach dem Umklappen der Dichtbandabschnitte kein Druck oder nur ein sehr geringer Druck seitlich auf das Dichtelement und somit auf die Schenkel des jeweiligen Sperrschichtabschnitts ausgeübt wird. Wird ein größerer Druck auf die Schenkel ausgeübt, kann der jeweilige Sperrschichtabschnitt knicken, wodurch die V-Form entsteht. Die Krümmung kann aber auch von der U- oder V-Form abweichende Gestalten aufweisen.

Wird eine Sperrschicht homogen auf eine Schaumstoffbahn aufgetragen, sind die Schenkel des mindestens einen ersten Sperrschichtabschnitts integral ausgebildet und die Schenkel des mindestens einen zweiten Sperrschichtabschnitts sind integral ausgebildet. Insbesondere bestehen die Schenkel und die die Schenkel verbindende Krümmung eines Sperrschichtabschnitts dann aus einem Stück der ursprünglichen Sperrschicht. Werden aber unterschiedliche Sperrschichtmaterialien auf die Schaumstoffbahn aufgebracht oder eine Sperrschicht aufgebracht, die sich aus mehreren Bestandteilen zusammensetzt, können die Schenkel auch nicht integral ausgebildet sein.

Um den Zusammenhalt und die Stabilität des Dichtelements zu erhöhen, sind die zwei Schenkel eines ersten bzw. eines zweiten Sperrschichtabschnitts zumindest abschnittsweise miteinander verhaftet. Bevorzugt wird eine mit Sperrschichten versehen Schaumstoffbahn bzw. eine aus mehreren Schaumstoffbahnen und Sperrschichten erzeugte Bahn vollständig durch einen Wärmetunnel geführt, bis die jeweils außenliegenden Sperrschichten ihren Schmelz- bzw. Klebepunkt erreichen. Erst danach werden einzelne Dichtbandabschnitte umgeklappt, so dass die Schenkel der Sperrschichtabschnitte aneinander zu liegen kommen und vorzugsweise durch Aufbringen von Druck senkrecht zu den Schenkeln miteinander verhaftet bzw. verschmolzen werden. In diesem Fall ist es einfach möglich, die Schenkel im Wesentlichen vollständig miteinander zu verhaften. Es ist aber auch möglich, eine Schaumstoff-Sperrschicht-Bahn, bei der sich die Sperrschichtabschnitte bereits innerhalb der Bahn befinden, durch entsprechende Heizmittel zu führen, wobei dabei nur Randbereiche der Sperrschichtabschnitte angeschmolzen werden. Die Schenkel der Sperrschichtabschnitte werden dann nur abschnittsweise miteinander verhaftet.

Vorzugsweise liegen die Schenkel des mindestens einen ersten und des mindestens einen zweiten Sperrschichtabschnitts an einem an den jeweiligen Schenkel angrenzenden Schaumstoffstreifen flächig an. Dadurch wird sowohl eine zuverlässige Verbindung der Schenkel mit dem jeweiligen Schaumstoffstreifen als auch der Zusammenhalt des Dichtelements in einer Querrichtung gewährleistet.

Besonders bevorzugt ist innerhalb jedes Dichtbandabschnitts mindestens ein weiterer Sperrschichtabschnitt aufgenommen, der parallel zu den Seitenflanken verläuft. Dies kann insbesondere dadurch erreicht werden, dass zu Beginn des Herstellungsverfahrens eine Mehrzahl von Schaumstoffbahnen und Sperrschichten abwechselnd übereinander angeordnet und miteinander verbunden werden und dadurch ein Schaumstoff-Sperrschicht-Stapel gebildet wird. Neben den zu faltenden Sperrschichtabschnitten ist dann zumindest ein vollständig durchtrennter Sperrschichtabschnitt in jedem Dichtbandabschnitt enthalten.

Aus einer Schaumstoff-Sperrschicht-Bahn, die breiter ist als das zu erzeugende Dichtelement, also mehr Schaumstoffstreifen und Sperrschichten aufweist, als das herzustellende Dichtelement aufweisen soll, kann durch Trennen dieser Schaumstoff-Sperrschicht-Bahn in mehrere Streifen oder durch Trennen einer aus der Schaumstoff-Sperrschicht-Bahn erzeugten Zwischenrolle eine Mehrzahl von Dichtelementen bzw. Dichtbandrollen hergestellt werden. Das Herstellungsverfahren kann dadurch noch effektiver gestaltet werden.

Besonders bevorzugt sind zwei aneinander angrenzende Dichtbandabschnitte des Dichtelements durch einen Verbindungsabschnitt miteinander verbunden. Der Verbindungsabschnitt umfasst den mindestens einen ersten Sperrschichtabschnitt oder den mindestens einen zweiten Sperrschichtabschnitt. Zudem kann der Verbindungsabschnitt einen Schaumstoffsteg umfassen. Ein solcher Schaumstoffsteg wird dann gebildet, wenn Einschnitte zum Bilden der Dichtbandabschnitte eine Schaumstoffbahn nicht vollständig durchtrennen, sondern die Schnitttiefe geringer ist als die Dicke der Schaumstoffbahn(en). Beim Umklappen der Dichtbandabschnitte bleiben die Schaumstoffstege bestehen. Der verbleibende Schaumstoffsteg schützt den an diesen angrenzenden Sperrschichtabschnitt insbesondere während des Einbringens der Einschnitte. Würde einer der genannten Einschnitte die jeweilige Schaumstoffbahn vollständig durchtrennen, bestünde die Gefahr, dass der jeweilige Sperrschichtabschnitt beschädigt wird. Umfasst der Verbindungsabschnitt jedoch einen Sperrschichtabschnitte und keinen Schaumstoffstreifen lassen sich die aneinander angrenzenden Dichtbandabschnitte besonders leicht entlang des Verbindungsabschnitts umklappen, da ein Schaumstoffsteg dem Umklappen einen erhöhten Widerstand entgegensetzt.

Es ist daher bevorzugt, dass der Schaumstoffsteg eine Höhe von max. 10 mm, mehr bevorzugt von max. 5 mm und noch mehr bevorzugt von max. 1 bis 2 mm aufweist. Auf diese Weise wird eine einfache Herstellung des Dichtbands ermöglicht, bei der zugleich eine ungewollte Verletzung von Sperrschichtmaterial vermieden wird. Zudem wird der Zusammenhalt des Dichtelements in Querrichtung unabhängig von einer optionalen Verhaftung der einzelnen Dichtbandabschnitte, z.B. durch Verhaftung der Schenkel der Sperrschichtabschnitt gewährleistet. Wird ein Schaumstoffsteg möglichst dünn gestaltet, ist auch ein einfaches Umklappen der Dichtbandabschnitte möglich, da der durch den Schaumstoffsteg aufgebrachte Widerstand entsprechend gering ist.

Schaumstoffstege zwischen aneinander angrenzenden Dichtbandabschnitten ermöglichen jedoch auch, dass eine Wasserdampfdiffusion durch diese Schaumstoffstege und somit um die Sperrschichtabschnitte herum durch das Dichtelement erfolgen kann. Um eine ausreichende Beeinflussung der Wasserdampfdiffusion durch das Dichtelement mittels der innenliegenden Sperrschichtabschnitte zu gewährleisten, erstrecken sich der mindestens eine erste und der mindestens eine zweite Sperrschichtabschnitt über mindestens 50%, vorzugsweise über mindestens 75%, mehr bevorzugt über mindestens 90% der Höhe des Dichtelements.

Schließlich ist es von Vorteil, dass die Unterseite des Dichtelements eine Klebeschicht zur Verbindung des Dichtelements mit einem Rahmenelement aufweist. Die Klebeschicht ist dadurch zu den Sperrschichten angeordnet. Die Unterseite des Dichtelements ist im zur Dichtbandrolle aufgewickelten Zustand radial nach außen gerichtet. Das Dichtelement lässt sich dadurch entlang eines Rahmenelements abrollen und schnell mittels der Klebeschicht an diesem befestigen. Die Klebeschicht ist vorzugsweise als doppelseitiges Klebeband ausgebildet, das auf einer Außenseite mit einer abziehbaren Schutzfolie bedeckt ist. Die Klebeschicht erhöht oder sorgt für den Zusammenhalt der Dichtbandabschnitte.

Weitere Merkmale und Vorteile der vorliegenden Erfindung ergeben sich aus der nachfolgenden Beschreibung unter Bezugnahme auf die Zeichnungen.
- Fig. 1a: zeigt beispielhaft den Schritt des Aufbringens einer ersten Sperrschicht auf eine erste Fläche einer Schaumstoffbahn;
- Fig. 1b: zeigt eine schematische Querschnittsansicht einer Schaumstoffbahn, auf die eine erste und eine zweite Sperrschicht aufgebracht sind;
- Fig. 2: zeigt in einer schematischen Querschnittsansicht den Schritt des Einbringens erster und zweiter Schnitte in die Schaumstoffbahn aus Fig. 1b;
- Fig. 3: zeigt in einer schematischen Querschnittsansicht den Schritt des Umklappens der beim Schneiden erzeugten Dichtbandstreifen aus Fig. 2;
- Fig. 4: zeigt eine schematische Querschnittsansicht einer durch Umklappen gemäß Fig. 3 erzeugten Schaumstoff-Sperrschicht-Bahn;
- Fig. 5a: zeigt in einer isometrischen Ansicht den Schritt des Aufwickelns der Schaumstoff-Sperrschicht-Bahn aus Fig. 4 zu einer Dichtbandrolle;
- Fig. 5b: zeigt in einer isometrischen Ansicht den Schritt des Durchtrennens einer aus der Schaumstoff-Sperrschicht-Bahn aus Fig. 4 gebildeten Zwischenrolle zum Erzeugen einer Mehrzahl von Dichtbandrollen in einer alternativen Ausführungsform;
- Fig. 5c: zeigt in einer isometrischen Ansicht den Schritt des Einbringens eines Schnitts in die Schaumstoff-Sperrschicht-Bahn aus Fig. 4 und des Aufwickelns von Schaumstoff-Sperrschicht-Streifen zu einzelnen Dichtbandrollen in einer weiteren alternativen Ausführungsform;
- Fig. 6: zeigt in einer schematischen Querschnittsansicht den Schritt des Einbringens erster und zweiter Schnitte in eine Mehrzahl von übereinander angeordneten Schaumstoffbahnen gemäß einer weiteren alternativen Ausführungsform;
- Fig. 7: zeigt in einer schematischen Querschnittsansicht den Schritt des Umklappens der beim Schneiden erzeugten Dichtbandabschnitte aus Fig. 6; und
- Fig. 8: zeigt eine schematische Querschnittsansicht einer durch Umklappen gemäß Fig. 7 erzeugten Schaumstoff-Sperrschicht-Bahn mit einer Detailansicht eines Verbindungsabschnitts.

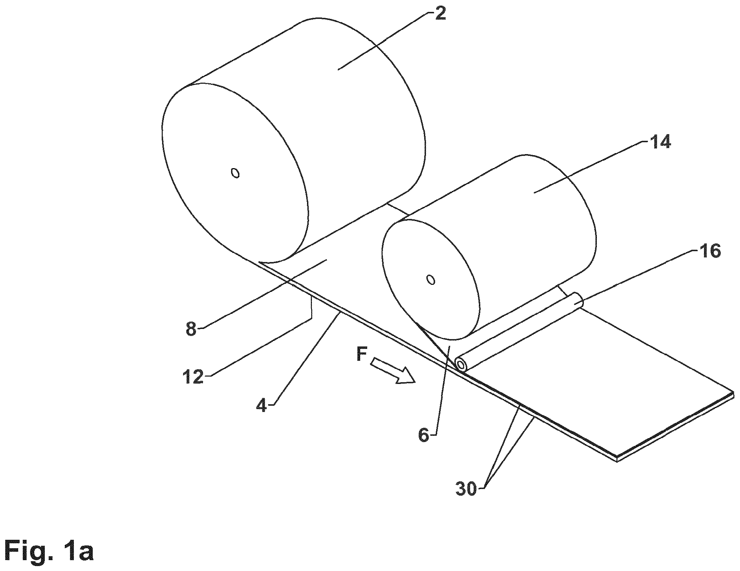

In Fig. 1a sind die ersten Schritte eines Ausführungsbeispiels eines Verfahrens zur Herstellung einer erfindungsgemäßen Dichtbandrolle dargestellt. Auf einer Ausgangsrolle 2 wird ein weicher Schaumstoff in Form einer aufgewickelten Schaumstoffbahn 4 bereitgestellt. Der weiche Schaumstoff wird auf der Ausgangsrolle 2 in großen Längen von bis zu 500 m, vorzugsweise zwischen 3 und 300 m, mehr bevorzugt zwischen 5 und 200 m bereitgestellt. Als Schaumstoffe können alle bekannten offenzelligen, gemischtzelligen oder geschlossenzelligen Weichschaumstoffe aus z.B. Polyurethan, Polyethylen, Polyvinylchlorid oder Polypropylen verwendet werden, die nach Kompression eine Rückstellung vollziehen. Die Schaumstoffbahn 4 kann vor der weiteren Bearbeitung bereits zur verzögerten Rückstellung auf bekannte Art und Weise imprägniert werden.

Durch Bereitstellung auf der Ausgangsrolle 2 kann die Schaumstoffbahn 4 besonders gut transportiert und verarbeitet werden. In der Regel befindet sich die Schaumstoffbahn 4 auf der Ausgangsrolle 2 in einem nicht oder nur geringfügig komprimierten Zustand. Es ist auch möglich, dass sich die Schaumstoffbahn 4 auf der Ausgangsrolle 2 in einem komprimierten Zustand befindet, allerdings muss dann nach dem Abwickeln von der Ausgangsrolle eine rechtzeitige Rückstellung des Schaumstoffmaterials im Prozessablauf sichergestellt sein. Die Breite der Schaumstoffbahn 4 liegt üblicherweise zwischen 1 cm und 5 m, vorzugsweise zwischen 0,5 m und 1,5 m. Die Höhe der Schaumstoffbahn 4 beträgt im entspannten Zustand üblicherweise zwischen 5 mm und 30 cm, vorzugsweise zwischen 10 mm und 10 cm.

Nach dem Abwickeln von der Ausgangsrolle 2 wird die Schaumstoffbahn 4 entlang einer Förderrichtung bewegt, die durch den Pfeil F gekennzeichnet ist. Anschließend wird eine erste Sperrschicht 6 auf eine erste Fläche 8 der Schaumstoffbahn 4 aufgebracht, um so eine kaschierte Schaumstoffbahn zu bilden. In der dargestellten Ausführungsform ist die erste Fläche 8 durch die oben liegende Oberfläche der Schaumstoffbahn 4 gebildet.

Nach dem Abwickeln von der Ausgangsrolle 2 wird auch eine zweite Sperrschicht 10 (nicht dargestellt) auf eine der ersten Fläche 8 gegenüberliegenden zweiten Fläche 12 der Schaumstoffbahn 4 aufgebracht. Die zweite Fläche 12 entspricht im vorliegenden Fall der Unterseite der Schaumstoffbahn 4. Das Verfahren zur Herstellung einer erfindungsgemäßen Dichtbandrolle wird nachfolgend unter Bezugnahme auf eine Ausführungsform beschrieben, bei der eine erste Sperrschicht 6 und eine zweite Sperrschicht 10 vorgesehen sind.

In der in Fig. 1a dargestellten Ausführungsform ist die erste Sperrschicht 6 durch eine Folienbahn gebildet, die auf einer Folienvorratsrolle 14 bereitgestellt ist. Ebenso kann die zweite Sperrschicht 10 durch eine Folienbahn gebildet sein, die ebenfalls auf einer Folienvorratsrolle bereitgestellt ist. Vorzugsweise wird die als Folienbahn ausgebildete erste Sperrschicht 6 von oben auf die erste Fläche 8 der Schaumstoffbahn 4 aufgebracht. Die zweite Sperrschicht 10 wird dann entsprechend von unten auf die zweite Fläche 12 der Schaumstoffbahn 4 aufgebracht. Das Aufbringen der ersten Sperrschicht 6 und der zweiten Sperrschicht 10 erfolgt in der Regel im Bereich einer Verbindungseinheit, die schematisch durch die Walze 16 dargestellt ist. Das Aufbringen der ersten Sperrschicht 6 und der zweiten Sperrschicht 10 umfasst in der Regel das Verbinden der jeweiligen Sperrschicht 6, 10 mit der Schaumstoffbahn 4, wobei der Verbindungsschritt wiederum einen Schritt der Wärmeaufbringung und/oder einen Schritt, die Sperrschicht 6, 10 und die Schaumstoffbahn 4 aneinander zu drücken, umfasst. Bei der Verwendung einer Folienbahn erfolgt die Verbindung mit der Schaumstoffbahn 4 in der Verbindungseinheit vorzugsweise durch Laminieren.

Die erste Sperrschicht 6 und die zweite Sperrschicht 10 können jeweils auch durch eine Bahn eines einseitig oder beidseitig klebenden Klebebands gebildet sein. Die klebende Seite eines solchen Klebebands ist dann in der Regel mit einer Abziehfolie versehen, die kurz vor dem Aufbringen auf die Schaumstoffbahn 4 abgelöst wird. Ebenso können die erste Sperrschicht 6 und die zweite Sperrschicht 10 durch eine Folienbahn gebildet sein, die selbst eine Schicht eines Klebebands oder eine feste Schicht eines Schmelzklebers umfasst. Schließlich kann zur Bildung der ersten Sperrschicht 6 und der zweiten Sperrschicht 10 auch ein klebstoffartiges flüssiges Medium mittels Düsen (z.B. Schmelzdüse, Flachdüse, Mischdüse) oder über Walzenauftrag (Transferwalze) auf die Schaumstoffbahn 4 aufgebracht werden. Je nach Klebstoff kann anschließend vorzugsweise in einer Verbindungseinheit, eine Verbindung mit der Schaumstoffbahn 4 stattfinden, wobei der Klebstoff in der Regel verfestigt wird. Es kommen grundsätzlich chemische und physikalische Arten der Verfestigung in Frage. Auch hier wird die Verbindung der ersten Sperrschicht 6 bzw. der zweiten Sperrschicht 10 mit der Schaumstoffbahn 4 in der Regel wieder einen Schritt der Wärmeaufbringung und/oder einen Schritt, die erste Sperrschicht 6 bzw. die zweite Sperrschicht 10 und die Schaumstoffbahn 4 aneinander zu drücken, umfassen. Es ist auch möglich, auf eine Folienbahn einseitig einen Sprühkleber aufzubringen und diese Kombination als erste Sperrschicht 6 und zweite Sperrschicht 10 zu verwenden. Schließlich kann als Sperrschicht 6, 10 auch eine Haut des Schaumstoffmaterials der Schaumstoffbahn 4 selbst dienen, wenn die Schaumstoffbahn 4 auf der entsprechenden Seite angeschmolzen wird und danach wieder verhärtet oder wenn die Schaumstoffbahn 4 fertigungsbedingt eine Haut aufweist.

Jeder oben genannte Schritt der Wärmeaufbringung erfolgt mittels einer Heizvorrichtung, die üblicherweise als Warmluftgebläse ausgestaltet ist. Es kommt aber auch Strahlungserhitzung in Frage, beispielsweise mittels einer Infrarotheizung oder Mikrowellenheizung.

Des Weiteren ist es denkbar, die erste Sperrschicht 6 und die zweite Sperrschicht 10 nur teilweise auf die entsprechende erste Fläche 8 bzw. zweite Fläche 12 aufzubringen. Die erste und die zweite Sperrschicht 6, 10 können auch jeweils mehrteilig ausgebildet sein und die erste und die zweite Fläche 8, 12 vollständig oder teilweise bedecken. Beispielsweise können einzelne Streifen einer Sperrschicht 6, 10 in Längsrichtung auf die erste und/oder die zweite Fläche 8, 12 aufgebracht werden. Zudem ist es möglich für die erste und die zweite Sperrschicht 6, 10 unterschiedliche Materialien zu verwenden. Ist die erste bzw. die zweite Sperrschicht 6, 10 mehrteilig ausgebildet, können auch die einzelnen Bestandteile der ersten bzw. der zweiten Sperrschicht 6, 10 aus unterschiedlichen Materialen sein. Es wird auf diese Weise eine Vielzahl von Möglichkeiten bereitgestellt, die Eigenschaften gezielt auf die gegebenen Anforderungen anzupassen.

Die Funktion der ersten Sperrschicht 6 und der zweiten Sperrschicht 10 in einem zur erfindungsgemäßen Dichtbandrolle aufzuwickelnden Dichtband liegt vorzugsweise in einer Reduzierung oder Verhinderung des Durchtritts von Luft und/oder Wasserdampf. Die erste Sperrschicht 6 und die zweite Sperrschicht 10 können auch feuchtevariabel ausgebildet sein. Das heißt, dass sie ihren Wasserdampf-Diffusionswiderstand in Abhängigkeit der Umgebungsfeuchte ändern. Für die erste und die zweite Sperrschicht eignen sich insbesondere Kunststofffolien, bspw. aus Polyolefinen, Polyurethan, Polyvinylchlorid, Polystyrol, Polycarbonat, Polyamid oder ähnlichen Kunststoffen, wie auch Biokunststoffe, Mehrschichtfolien (Coex-Folien) aus verschiedenen Kunststoffen, physikalisch abbindende Klebstoffe, z.B. Dispersionsklebstoffe auf Acrylatbasis, Schmelzklebstoffe oder ähnliche Klebstoffe, Polykondensationsklebstoffe, z.B. Silikone, Hybridpolymer und ähnliche.

Es ist auch möglich, dass eine bereits mit einer ersten Sperrschicht 6 und/oder einer zweiten Sperrschicht 10 kaschierte Schaumstoffbahn 4, die vorher hergestellt wurde, zu der Ausgangsrolle 2 aufgewickelt ist.

Es kann weiterhin wünschenswert sein, ein Zusatzmaterial (nicht dargestellt) aufzubringen. Das Zusatzmaterial kann dabei bereits mit der ersten Sperrschicht 6 und/oder der zweiten Sperrschicht 10 verhaftet sein und so in einem Schritt mit der entsprechenden Sperrschicht 6, 10 auf die Schaumstoffbahn 4 aufgebracht werden. Alternativ kann das Zusatzmaterial vollflächig oder auch nur streifenförmig noch vor der ersten Sperrschicht 6 und der zweiten Sperrschicht 10 auf die erste Fläche 8 und/oder die zweite Fläche 12 der Schaumstoffbahn 4 aufgebracht werden. Das Zusatzmaterial kann auch erst nach der ersten Sperrschicht 6 und der zweiten Sperrschicht 10 außen vollflächig oder auch nur streifenförmig auf die jeweilige Sperrschicht 6, 10 aufgebracht werden. Als Zusatzmaterial kommen insbesondere Materialien zum Brandschutz (z.B. Blähgraffit, nicht brennbare Festkörper, CO₂-Emitter etc.), Materialien zur Isolierung (z.B. PU-Schaum, Harze, Dichtstoffe, etc.), Materialien zur Abdichtung gegen Feuchte (z.B. hydrophobe oder hydrophile Substanzen, bei Kontakt mit Wasser aufquellende Substanzen, etc.), Materialien zur Schallisolierung, Materialien zur kontrollierten Belüftung (z.B. Katalysatoren, etc.), Materialien für die Hygiene (z.B. Desinfektionsmittel, etc.) und/oder Materialien zur Auslösung der Expansion des Dichtbands (z.B. Treibmittel, Wärmequellen, etc.) in Frage. Dem Fachmann sind hier sowohl bezüglich der Anordnung sowie der Art und Eigenschaften des Zusatzmaterials Alternativen ersichtlich, die zum Erfüllen der jeweiligen Anforderungen einsetzbar sind.

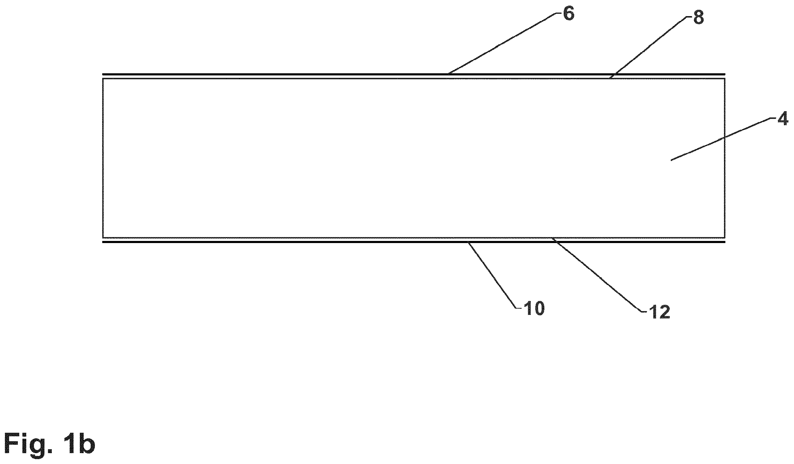

Fig. 1b zeigt eine schematische Querschnittsansicht der Schaumstoffbahn 4 nach dem Aufbringen der ersten Sperrschicht 6 auf die erste Fläche 8 und der zweiten Sperrschicht 10 auf die zweite Fläche 12 der Schaumstoffbahn 4.

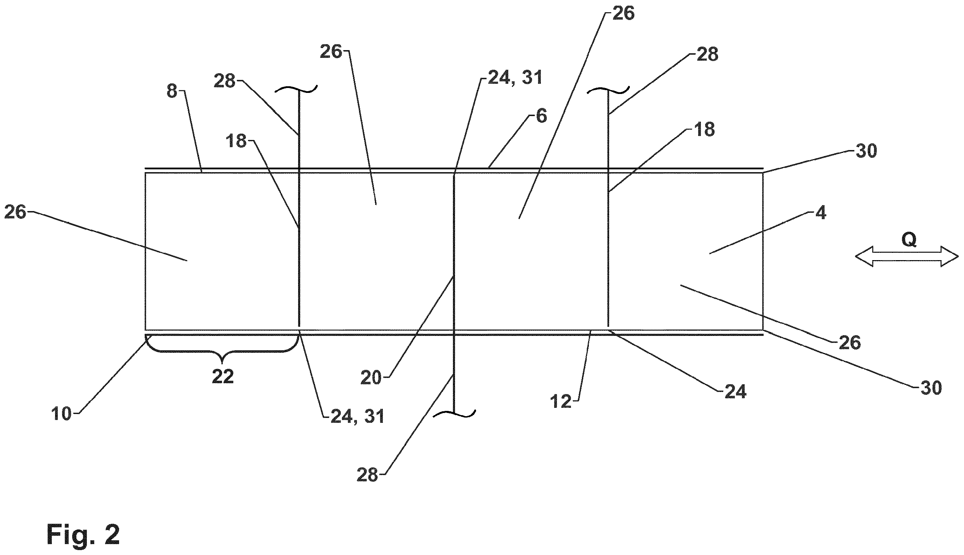

Im Folgenden sind die weiteren Schritte eines Ausführungsbeispiels des Verfahrens zur Herstellung einer erfindungsgemäßen Dichtbandrolle gemäß einer ersten Ausführungsform anhand der Fig. 2 bis 5 beschrieben. In der ersten Ausführungsform sind eine erste und eine zweite Sperrschicht 6, 10 vorgesehen.

In Fig. 2 ist zu sehen, wie mindestens ein erster Schnitt 18 (hier zwei erste Schnitte 18) in die erste Fläche 8 der Schaumstoffbahn 4 in einer Längsrichtung der Schaumstoffbahn 4, die sich senkrecht zur Zeichenebene erstreckt, eingebracht wird. Die Längsrichtung verläuft parallel zur zweiten Fläche 12 bzw. Unterseite der Schaumstoffbahn 4 und parallel zu die erste Fläche 8 und die zweite Fläche 12 der Schaumstoffbahn 4 verbindende Seitenflanken der Schaumstoffbahn 4. Die Längsrichtung verläuft somit parallel zur Förderrichtung F. Mindestens ein zweiter Schnitt 20 (hier zwei zweite Schnitte 20) wird in die zweite Fläche 12 der Schaumstoffbahn 4 in Längsrichtung der Schaumstoffbahn 4, sowie in einer Querrichtung der Schaumstoffbahn 4 versetzt zum mindestens einen ersten Schnitt 18, eingebracht. Die Querrichtung der Schaumstoffbahn 4 ist in Fig. 2 durch den Pfeil Q gekennzeichnet und ist senkrecht zur Längsrichtung und parallel zur 2. Fläche 12 bzw. Unterseite der Schaumstoffbahn 4 ausgerichtet. Wenn der Abschnitt der ersten Fläche 8 im Bereich des mindestens einen ersten Schnitts 18 von der ersten Sperrschicht 6 bedeckt ist, wird diese vom mindestens einen ersten Schnitt 18 durchtrennt. Analog durchtrennt der mindestens eine zweite Schnitt 20 die zweite Sperrschicht 10, sofern die zweite Fläche 12 im Bereich des mindestens einen zweiten Schnitts 20 von der zweiten Sperrschicht 10 bedeckt ist.

Ein "erster Schnitt" ist dabei ein Schnitt, der in die erste Fläche der Schaumstoffbahn eingebracht wird. Ein "zweiter Schnitt" ist ein Schnitt, der in die zweite Fläche der Schaumstoffbahn eingebracht wird. Durch die Angaben "erster" und "zweiter" soll keine zeitliche Reihenfolge des Einbringens der Schnitte in die Schaumstoffbahn festgelegt sein. So kann beispielsweise das Einbringen eines zweiten Schnitts auch vor dem Einbringen eines ersten Schnitts erfolgen. Es können auch alle Schnitte gleichzeitig in die Schaumstoffbahn eingebracht werden.

Durch das Einbringen des mindestens einen ersten Schnitts 18 und des mindestens einen zweiten Schnitts 20 werden parallel verlaufende Dichtbandstreifen 22 gebildet, wobei zwischen zwei aneinander angrenzenden Dichtbandstreifen 22 ein Verbindungsabschnitt 24 verbleibt. Der mindestens eine erste Schnitt 18 teilt die erste Sperrschicht 6 in eine Mehrzahl von Teilabschnitten bzw. Mehrzahl ersten Sperrschichtabschnitte. Der mindestens eine zweite Schnitt 20 teilt die zweite Sperrschicht 10 in eine Mehrzahl von Teilabschnitten bzw. Mehrzahl von zweiten Sperrschichtabschnitten. Jeder Dichtbandstreifen 22 wird durch einen Schaumstoffstreifen 26 sowie die an diesem angebrachten Teilabschnitte der ersten Sperrschicht 6 und der zweiten Sperrschicht 10 gebildet.

Der mindestens eine erste Schnitt 18 und der mindestens eine zweite Schnitt 20 werden vorzugsweise mittels Messer 28, mehr bevorzugt mittels paralleler Messer 28, in die Schaumstoffbahn 4 in Längsrichtung derselben und vorzugsweise parallel zu den Längskanten 30 der Schaumstoffbahn 4 eingebracht. Die Längskanten 30 sind dabei die Kanten der Schaumstoffbahn 4, die parallel zur Förderrichtung F und orthogonal zur axialen Richtung der Ausgangsrolle 2 verlaufen. Zum Einbringen des mindestens einen ersten Schnitts 18 und des mindestens einen zweiten Schnitts 20 in die Schaumstoffbahn 4 können neben den Messern 28 alle anderen dem Fachmann bekannten Verfahren zum Einschneiden von Schaumstoffbahnen 4 verwendet werden, wie z. B. Sägen.

Der mindestens eine erste Schnitt 18 und der mindestens eine zweite Schnitt 20 können die Schaumstoffbahn 4 jeweils entweder vollständig durchtrennen oder die Schaumstoffbahn 4 nicht vollständig durchtrennen, so dass zwischen den zwei angrenzenden Schaumstoffstreifen 26 ein Schaumstoffsteg 31 verbleibt.

Der mindestens eine zweite Schnitt 20 kann die Schaumstoffbahn 4 vollständig durchtrennen oder nicht vollständig durchtrennen. Für den Fall, dass der mindestens eine zweite Schnitt 20 die Schaumstoffbahn 4 vollständig durchtrennt, wird der mindestens eine Verbindungsabschnitt 24 im Bereich der ersten Fläche 8 allein durch die erste Sperrschicht 6 gebildet. Durchtrennt der mindestens eine zweite Schnitt 20 die Schaumstoffbahn 4 nicht vollständig, wird der mindestens eine Verbindungsabschnitt 24 im Bereich der ersten Fläche 8 durch einen Schaumstoffsteg 31 und die erste Sperrschicht 6 gebildet.

Der mindestens eine erste Schnitt 18 kann ebenfalls derart in die Schaumstoffbahn 4 eingebracht werden, dass er diese vollständig durchtrennt oder nicht vollständig durchtrennt. Durchtrennt der mindestens eine erste Schnitt 18 die Schaumstoffbahn 4 vollständig, wird der mindestens eine Verbindungsabschnitt 24 im Bereich der zweiten Fläche 12 allein durch die zweite Sperrschicht 10 gebildet. Durchtrennt der mindestens eine erste Schnitt 18 die Schaumstoffbahn 4 nicht vollständig, sodass zwischen den angrenzenden Schaumstoffstreifen 26 ein Schaumstoffsteg 31 verbleibt, umfasst der mindestens eine Verbindungsabschnitt 24 im Bereich der zweiten Fläche 12 diesen Schaumstoffsteg 31 und die zweite Sperrschicht 10.

In Hinblick auf die nachfolgenden Verfahrensschritte ist es bevorzugt, die Verbindungsabschnitte 24 möglichst dünn zu gestalten. Werden die Verbindungsabschnitte 24 nur durch die erste Sperrschicht 6 und die zweite Sperrschicht 10 gebildet, bilden diese im Bereich der Verbindungsabschnitte 24 eine Art Scharnierverbindung, die die beiden angrenzenden Schaumstoffstreifen 26 gelenkig miteinander verbindet. Auch ein Schaumstoffsteg 31 zwischen den angrenzenden Schaumstoffstreifen 26 bildet eine solche Scharnierverbindung. Es ist jedoch zu berücksichtigen, dass mit zunehmender Höhe des Schaumstoffstegs 31 das nachfolgende Umklappen der Dichtbandstreifen 22 im Bereich der Verbindungsabschnitte 24, die einen Schaumstoffsteg 31 umfassen, erschwert wird. Falls Schaumstoffstege 31 vorgesehen sind, weisen diese deshalb bevorzugt eine Höhe von maximal 10 mm, mehr bevorzugt von maximal 5 mm und noch mehr bevorzugt von maximal 1 bis 2 mm auf. Die Schaumstoffstege 31 eignen sich insbesondere dazu, die erste Sperrschicht 6 und die zweite Sperrschicht 10 beim Einbringen des mindestens einen ersten Schnitts 18 und des mindestens einen zweiten Schnitts 20 vor Beschädigung zu schützen.

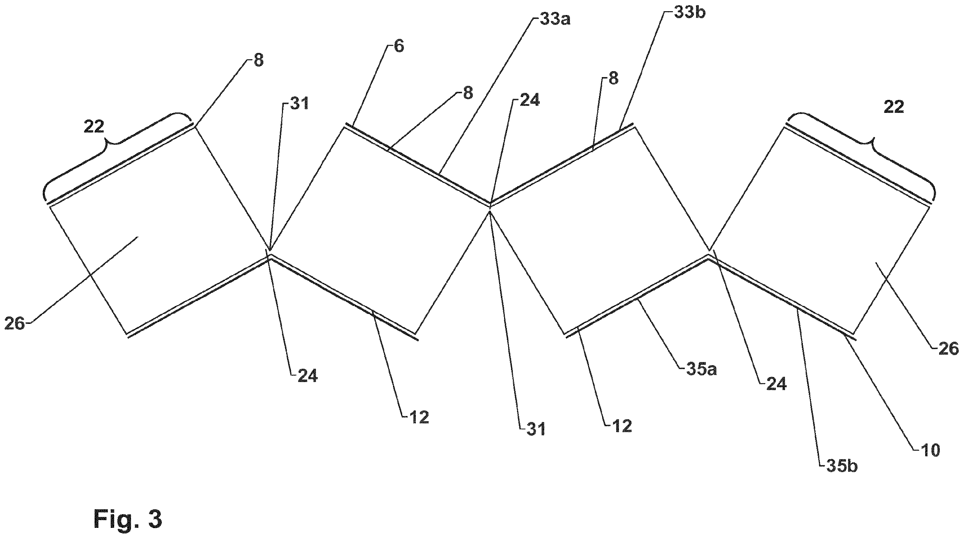

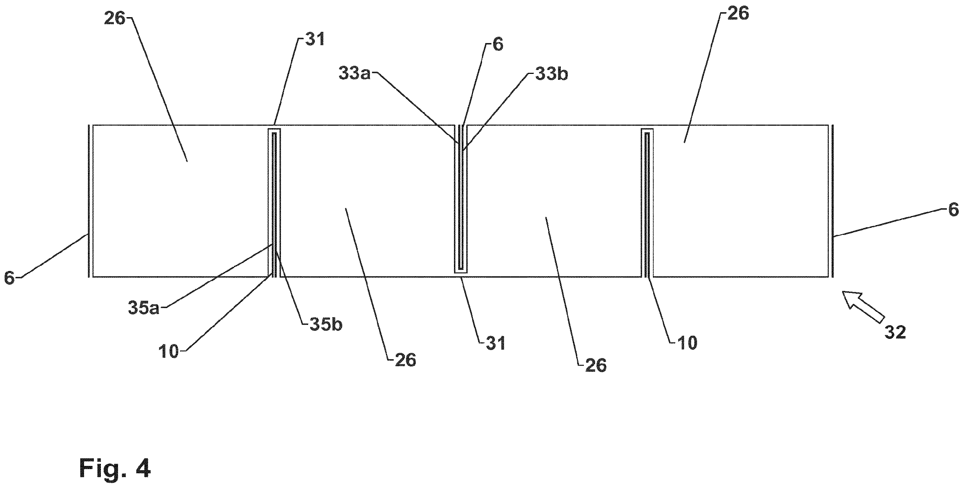

In Fig. 3 ist der Schritt des Umklappens der Dichtbandstreifen 22 im Bereich der Verbindungsabschnitte 24 zur Herstellung einer Schaumstoff-Sperrschicht-Bahn 32 zu sehen. Eine entsprechende Schaumstoff-Sperrschicht-Bahn 32 ist in Fig. 4 dargestellt.

Die Dichtbandstreifen 22, die durch einen zweiten Schnitt 20 voneinander getrennt sind, sind durch einen Verbindungsabschnitt 24 im Bereich der ersten Fläche 8 miteinander verbunden. Diese Dichtbandabschnitte 22 werden derart im Bereich dieser Verbindungsabschnitte 24 umgeklappt, dass sich die Teilabschnitte der ersten Fläche 8, die jeweils an einen gemeinsamen Verbindungsabschnitt 24 angrenzen, gegenüberliegen. Die Teilabschnitte der ersten Sperrschicht 6 bzw. ersten Sperrschichtabschnitte zweier aneinander angrenzender Dichtbandstreifen 22 mit einem gemeinsamen Verbindungsabschnitt 24 im Bereich der ersten Fläche 8 kommen möglichst flächig aneinander zu liegen.

Die Dichtbandstreifen 22, die durch einen ersten Schnitt 18 voneinander getrennt sind, sind durch einen Verbindungsabschnitt 24 im Bereich der zweiten Fläche 10 miteinander verbunden. Diese Dichtbandabschnitte 22 werden wiederum derart im Bereich dieser Verbindungsabschnitte 24 umgeklappt, dass sich die Teilabschnitte der zweiten Fläche 10, die jeweils an einen gemeinsamen Verbindungsabschnitt 24 angrenzen, gegenüberliegen. Die Teilabschnitte der zweiten Sperrschicht 10 bzw. zweiten Sperrschichtabschnitte zweier aneinander angrenzender Dichtbandstreifen 22 mit einem gemeinsamen Verbindungsabschnitt 24 im Bereich der zweiten Fläche 12 kommen flächig aneinander zu liegen.

Das Umklappen der Dichtbandstreifen 22 im Bereich der Verbindungsabschnitte 24 erfolgt vorzugsweise, während die Schaumstoffbahn 4 bzw. die Dichtbandstreifen 22 weiter in Förderrichtung F transportiert werden. Es können dazu Mittel vorgesehen sein, um den mindestens einen ersten Schnitt 18 und den mindestens einen zweiten Schnitt 20 zu öffnen. Beispielsweise werden die in Querrichtung Q der Schaumstoffbahn 4 außen angeordneten Dichtbandstreifen 22 von den Mitteln gegriffen. Die Mittel ziehen die Schaumstoffbahn 4 dann in Querrichtung Q auseinander, um die Schnitte 18, 20 zu öffnen. Alternativ werden die Mittel in den mindestens einen ersten Schnitt 18 und den mindestens einen zweiten Schnitt 20 eingeführt und spreizen die angrenzenden Dichtbandstreifen 22 allmählich auseinander. Das vollständige Umklappen erfolgt in beiden Fällen durch geeignete Führungen, die beispielsweise einen entsprechenden Druck auf die gegenüberliegenden Flächen der Dichtbandstreifen 22 ausüben und so ein Umklappen der Dichtbandstreifen 22 bewirken.

In Fig. 4 ist die Schaumstoff-Sperrschicht-Bahn 32 schematisch dargestellt. Die nach innen geklappten Teilabschnitte bzw. Sperrschichtabschnitte der ersten und zweiten Sperrschicht 6, 10 bilden nun Sperrschichten, die zwischen zwei aneinander angrenzenden Schaumstoffstreifen 26 aufgenommen sind, im Wesentlichen senkrecht zur Unterseite der Schaumstoff-Sperrschicht-Bahn 32 ausgerichtet sind und sich über einen Großteil der Höhe der Schaumstoff-Sperrschicht-Bahn 32 zwischen deren Oberseite und Unterseite erstrecken. Wie aus den Figuren 3 und 4 hervorgeht, bilden die umzuklappenden Teilabschnitte bzw. Sperrschichtabschnitte der ersten Sperrschicht 6 Schenkel 33a, 33b der ersten Sperrschicht 6, wobei die zwei Schenkel 33a, 33b miteinander verbunden sind. Die umzuklappenden Teilabschnitte bzw. Sperrschichtabschnitte der zweiten Sperrschicht 10 bilden Schenkel 35a, 35b der zweiten Sperrschicht 10, wobei auch die Schenkel 35a, 35b miteinander verbunden sind.

Die Schenkel 33a, 33b, 35a, 35b der ersten und der zweiten Sperrschicht 6, 10 ergeben sich insbesondere durch das Umklappen der Dichtbandstreifen 22 entlang der Verbindungsabschnitte 24. Die Schenkel 33a, 33b der ersten Sperrschicht 6 sind daher im Bereich des jeweils angrenzenden Verbindungsabschnitts 24 miteinander verbunden. Auch die Schenkel 35a, 35b der zweiten Sperrschicht 10 sind im Bereich eines jeweils angrenzenden Verbindungsabschnitts 24 miteinander verbunden. Die Schenkel 33a, 33b der ersten Sperrschicht 6 sind im Bereich einer Unterseite der Schaumstoff-Sperrschicht-Bahn 32 miteinander verbunden und die Schenkel 35a, 35b der zweiten Sperrschicht 10 sind im Bereich einer Oberseite der Schaumstoff-Sperrschicht-Bahn 32 miteinander verbunden. Weist die Schaumstoff-Sperrschicht-Bahn 32 mehrere erste Sperrschichten 6 und/oder mehrere zweite Sperrschichten 10 auf, wechseln sich vorzugsweise immer eine erste Sperrschicht 6 und eine zweite Sperrschicht 10 in Querrichtung der Schaumstoff-Sperrschicht-Bahn 32 ab.

Die Schenkel 33a, 33b, 35a, 35b sind durch die Sperrschichten 6, 10 gebildet, wobei sowohl die erste als auch die zweite Sperrschicht 6, 10 jeweils mit den angrenzenden Schaumstoffstreifen 26 verbunden sind. Die Schenkel 33a, 33b, 35a, 35b der ersten und der zweiten Sperrschicht 6, 10 liegen daher flächig an den jeweils angrenzenden Schaumstoffstreifen 26 an.

Durch das Umklappen der Dichtbandstreifen 22 entlang der Verbindungsabschnitte 24 werden die erste und die zweite Sperrschicht 6, 10 im Bereich der jeweils angrenzenden Verbindungsabschnitte 24 gekrümmt. Die zwei Schenkel 33a, 33b, 35a, 35b einer Sperrschicht 6, 10 sind dann vorzugsweise durch eine Krümmung der jeweiligen Sperrschicht 6, 10 im Bereich der Längsränder der Schenkel miteinander verbunden. Die Krümmung kann aber auch aus einem anderen streifenförmigen Material gebildet sein, das beidseitig mit den jeweiligen Schenkeln 33a, 33b, 35a, 35b verbunden ist. Die Krümmung kann U-förmig oder V-förmig ausgebildet sein oder eine andere geometrische Form aufweisen. Die Schenkel 33a, 33b, 35a, 35b und die Krümmung können z.B. eine Schlaufe bilden. Zwei Schenkel 33a, 33b, 35a, 35b einer Sperrschicht 6, 10 sind vorzugsweise integral ausgebildet. Nach dem Umklappen verlaufen die Schenkel 33a, 33b, 35a, 35b einer Sperrschicht 6, 10 im Wesentlichen parallel zu einander.

In Fig. 4 weist die Schaumstoff-Sperrschicht-Bahn 32 eine bevorzugte, im Wesentlichen ebene Gestalt auf. Dies wird dadurch erreicht, dass der mindestens eine erste Schnitt 18 und der mindestens eine zweite Schnitt 20 in Querrichtung Q der Schaumstoffbahn 4 in gleichmäßigen Abständen zueinander eingebracht werden, um Dichtbandstreifen 22 gleicher Breite zu erzeugen. Wie aus der Zusammenschau der Fig. 2 bis 4 hervorgeht, entspricht eine Breite der Dichtbandstreifen 22 in der Schaumstoffbahn 4 nach Fig. 2 nach dem Umklappen zur Schaumstoff-Sperrschicht-Bahn 32 nach Fig. 4 der Höhe der Dichtbandstreifen 22. Eine gleichmäßige Breite aller Dichtbandstreifen 22 der Schaumstoffbahn 4 führt somit zu einer gleichmäßigen Höhe der Dichtbandstreifen 22 in der Schaumstoff-Sperrschicht-Bahn 32.

Es kann aber auch gewünscht sein, dass der mindestens eine erste Schnitt 18 und der mindestens eine zweite Schnitt 20 in Querrichtung Q der Schaumstoffbahn 4 in ungleichmäßigen Abständen zueinander eingebracht werden. Die Dichtbandstreifen 22 der Schaumstoffbahn 4 weisen dann unterschiedliche Breiten auf. Dies führt dazu, dass die Dichtbandstreifen 22 in der Schaumstoff-Sperrschicht-Bahn 32 unterschiedliche Höhen haben, wodurch eine profilierte Schaumstoff-Sperrschicht-Bahn 32 entsteht. Es sind Anwendungsbereiche denkbar, in denen zusätzlich zu den innenliegenden Sperrschichten 6, 10 eine abschnittsweise erhöhte Kompression in einem Dichtband gewünscht ist, welche durch eine solche profilierte Schaumstoff-Sperrschicht-Bahn 32 erzielt werden kann.

Des Weiteren ist es bezüglich einer vorteilhaften Gestalt der Schaumstoff-Sperrschicht-Bahn 32 bevorzugt, dass in Querrichtung Q der Schaumstoffbahn 4 betrachtet abwechselnd ein erster Schnitt 18 und ein zweiter Schnitt 20 in die Schaumstoffbahn 22 eingebracht sind, wenn mindestens zwei erste Schnitte 18 und/oder mindestens zwei zweite Schnitte 20 vorgesehen sind. Dadurch wird erreicht, dass die Dichtbandstreifen 22 nach dem Umklappen im Bereich der Verbindungsabschnitte 24 nebeneinander zu liegen kommen und sich nicht aufeinander stapeln. Dies trägt ebenso dazu bei, eine im Wesentlichen ebene Schaumstoff-Sperrschicht-Bahn 32 zu bilden.

Zwei aneinander angrenzende Dichtbandstreifen 22 sind zumindest durch die miteinander verbundenen Schenkel 33a, 33b, 35a, b der jeweiligen Sperrschicht 6, 10 miteinander verbunden. Zudem ist es bevorzugt, dass die sich jeweils gegenüberliegenden Teilabschnitte der ersten bzw. der zweiten Fläche 8, 12 der Schaumstoffstreifen 26, die mit der ersten Sperrschicht 6 oder der zweiten Sperrschicht 10 versehen sind, nach dem Umklappen miteinander verbunden werden. Dies kann insbesondere dadurch geschehen, dass die Dichtbandstreifen 22 vor dem Verbinden erwärmt werden, so dass das Material der ersten Sperrschicht 6 und, falls vorhanden, der zweiten Sperrschicht 10 auf eine Temperatur oberhalb ihrer jeweiligen Schmelztemperatur bzw. ihres Klebepunkts erwärmt werden. Abhängig vom verwendeten Material der jeweiligen Sperrschicht 6, 10 sind hier dieselben Möglichkeiten gegeben, wie sie eingangs zum Verbinden der Sperrschichten 6, 10 mit der Schaumstoffbahn 4 beschrieben sind.

Das Erwärmen des Materials der ersten Sperrschicht 6 und/oder der zweiten Sperrschicht 10 ist besonders einfach und gleichmäßig möglich, wenn die gesamte Schaumstoffbahn 4 vor dem Umklappen der Dichtbandstreifen 22 erwärmt wird. Z.B. kann die gesamte Bahn durch einen Wärmetunnel geführt werden. Die Dichtbandstreifen 22 werden dann unmittelbar nach dem Umklappen zur Schaumstoff-Sperrschicht-Bahn 32 miteinander verbunden. Wurden die Sperrschichten 6, 10 vollständig erwärmt, können die nach dem Umklappen einander gegenüberliegenden Schenkel 33a, 33b, 35a, 35b der jeweiligen Sperrschicht 6, 10 großflächig, vorzugsweise nahezu vollständig miteinander verhaftet bzw. verschmolzen werden. Die Schenkel 33a, 33b, 35a, 35b der jeweiligen Sperrschicht 6, 10 können aber auch nur abschnittsweise miteinander verhaftet oder verschmolzen werden. Es ist auch möglich, erst die Schaumstoff-Sperrschicht-Bahn 32 nach dem Umklappen der Dichtbandstreifen 22 zu erwärmen. Dabei kann es ausreichend sein, wenn nur Randbereiche der Sperrschichten 6, 10 erwärmt werden. Die Schenkel 33a, 33b, 35a, 35b werden dann nur abschnittsweise, nämlich in den äußeren Randbereichen der Schaumstoff-Sperrschicht-Bahn 32 miteinander verhaftet oder verschmolzen. Ein zuverlässiges Verbinden der Dichtbandstreifen 22 zur Schaumstoff-Sperrschicht-Bahn 32 ist zu gewährleisten.

Weiterhin werden die Dichtbandstreifen 22 der Schaumstoff-Sperrschicht-Bahn 32 vorzugsweise nach dem Erwärmen aneinander gedrückt. Ein Druck wird dabei in Querrichtung auf die Schaumstoff-Sperrschicht-Bahn senkrecht zu den Teilabschnitten der ersten und der zweiten Fläche 8, 12 bzw. senkrecht zu den Teilabschnitten bzw. Schenkeln der ersten und zweiten Sperrschicht 6, 10 aufgebracht. Durch den Druck werden die miteinander zu verbindenden Dichtbandstreifen 22 flächig aneinander gedrückt, um eine zuverlässige und möglichst vollständige Verbindung zu erreichen. Hierfür können bereits geringe Drücke ausreichen.

Alternativ kann zusätzlich zum Erwärmen der Dichtbandstreifen 22 oder anstelle des Erwärmens der Dichtbandstreifen 22 ein zusätzliches Verbindungsmittel, beispielsweise ein Klebstoff, zwischen die Dichtbandstreifen 22 eingebracht werden.

Falls die ursprüngliche Schaumstoffbahn 4 noch nicht imprägniert war, kann der Schritt des Imprägnierens hier nachgeholt werden. Dies erfolgt üblicherweise mittels Walzen in einem Tauchbad eines Imprägniermittels, Ausquetschen überschüssigen Imprägnats und anschließendem Trocknen unter Wärmezufuhr. Die Imprägnierung ist auch an anderen Stellen des Prozesses möglich.

Durch das Umklappen der Dichtbandstreifen 22 ändert sich die Breite des weiterzuverarbeitenden Gebildes von der Breite der Schaumstoffbahn 4 zu der Breite der Schaumstoff-Sperrschicht-Bahn 32. In einer bevorzugten Ausführungsform sind der mindestens eine erste Schnitt 18 und der mindestens eine zweite Schnitt 20 derart zueinander beabstandet in die Schaumstoffbahn 4 eingebracht, dass die Breite der Schaumstoff-Sperrschicht-Bahn 32 kleiner ist als die Breite der Schaumstoffbahn 4. Es kann daher wünschenswert sein, vor den weiteren Schritten mindestens zwei Schaumstoff-Sperrschicht-Bahnen 32 nebeneinander anzuordnen und unter Umständen miteinander zu verbinden. Dabei ist es besonders bevorzugt, wenn eine zusammengefügte Schaumstoff-Sperrschicht-Bahn 32 erzielt wird, deren Breite der Breite der Schaumstoffbahn 4 entspricht. Auf diese Weise bleibt die Gesamtbreite des zu verarbeitenden Gebildes während des gesamten Verfahrens im Wesentlichen konstant. Im Folgenden kann es sich daher auch stets um eine aus mehreren Schaumstoff-Sperrschicht-Bahnen 32 zusammengefügte Schaumstoff-Sperrschicht-Bahn 32 handeln.

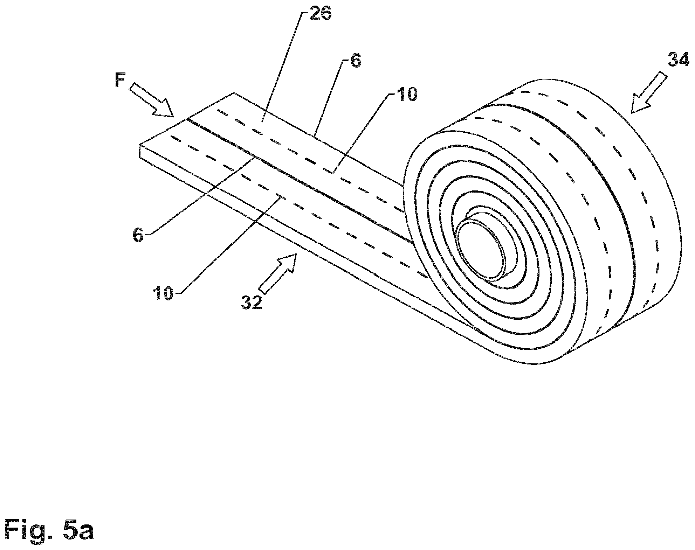

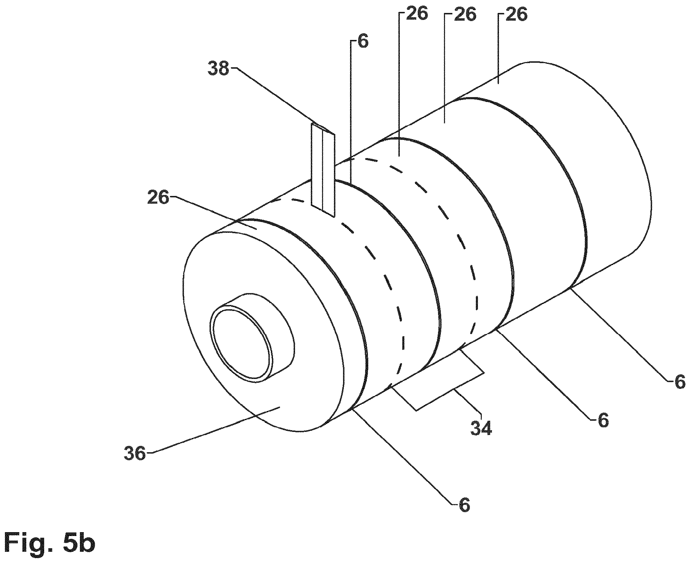

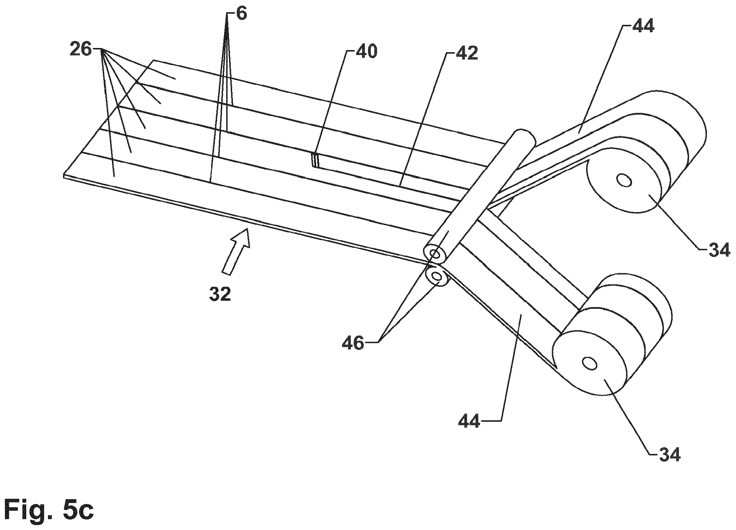

Aus der Schaumstoff-Sperrschicht-Bahn 32 wird schließlich mindestens eine erfindungsgemäße Dichtbandrolle 34 gebildet. Dazu stehen im Wesentlichen drei alternative Verfahren zur Verfügung, die in Bezug auf Fig. 5a, 5b und 5c beschrieben sind.

Die Schaumstoff-Sperrschicht-Bahn 32 kann bereits den Anforderungen an das herzustellende Dichtband, insbesondere im Hinblick auf die Breite und die Anzahl der innenliegenden Sperrschichten entsprechen, sodass die Schaumstoff-Sperrschicht-Bahn 32 ein fertiges Dichtelement oder Dichtband bildet. Die in Förderrichtung F transportierte Schaumstoff-Sperrschicht-Bahn 32 kann dann unmittelbar zu einer Dichtbandrolle 34 aufgewickelt werden, wie in Fig. 5a dargestellt ist. Die Dichtbandrolle 34 weist mindestens eine aus der ersten Sperrschicht 6 gebildete innenliegende Sperrschicht auf, die in radialer Richtung der Dichtbandrolle 34 verläuft und axial zwischen zwei Schaumstoffstreifen 26 aufgenommen ist. In der Regel sind mehrere Sperrschichten durch die erste Sperrschicht 6 gebildet und eine oder mehrere Sperrschichten durch die zweite Sperrschicht 10 gebildet.

Ist die Schaumstoff-Sperrschicht-Bahn 32 breiter als das herzustellende Dichtband und/oder weist mehr innenliegende Sperrschichten auf, als die herzustellende Dichtbandrolle 34 aufweisen soll, kann die Schaumstoff-Sperrschicht-Bahn 32 zunächst zu einer Zwischenrolle 36 aufgewickelt werden. Wie in Fig. 5b dargestellt, wird die Zwischenrolle 36 an einer oder an mehreren Stellen in axialer Richtung durchtrennt, um eine Mehrzahl von Dichtbandrollen 34 zu erzeugen, die weniger breit sind als die Zwischenrolle 36. Vorzugsweise wird das Durchtrennen der Zwischenrolle 36 mittels einer oder mehrerer paralleler Sägen 38 durchgeführt. In Fig. 5b ist nur eine Säge 38 dargestellt und ein weiterer paralleler Schnitt zum Durchtrennen der Zwischenrolle 36 ist gestrichelt angedeutet. Der mindestens eine Schnitt zum Durchtrennen der Zwischenrolle 36 wird dabei bevorzugt in einen Schaumstoffstreifen 26 eingebracht, um die innenliegenden Sperrschichten nicht zu beschädigen. Auch hier können andere geeignete Verfahren zum Durchtrennen verwendet werden (z.B. Messer, beheizte Drähte, Laserschneiden, Wasserstrahlschneiden).

Die Zwischenrolle 36 wird derart in Dichtbandrollen 34 geschnitten, dass sich Schaumstoffstreifen 26 und die mindestens eine erste Sperrschicht 6 in axialer Richtung der Dichtbandrolle 34 abwechseln. Dabei ist in einer Dichtbandrolle 34 jede radial verlaufende erste Sperrschicht 6 zwischen zwei Schaumstoffstreifen 26 aufgenommen, wodurch das Dichtband eine erhöhte Abdichtung gegen Luftzug und/oder Dampfdiffusion aufweist und jede Sperrschicht 6 gleichzeitig vor äußerer Beschädigung geschützt ist. Die Sperrschichten erstrecken sich innerhalb der Dichtbandrolle parallel zu den Stirnflächen der Dichtbandrolle. Ist der mindestens eine erste Schnitt 18 und/oder der mindestens eine zweite Schnitt 20 derart in die Schaumstoffbahn 4 eingebracht, dass sie diese nicht vollständig durchtrennen, bedecken die verbleibenden Schaumstoffstege 31 die zwischen den Dichtbandstreifen 22 aufgenommen Teilabschnitte bzw. Schenkel 33a, 33b, 35a, 35b der ersten und der zweiten Sperrschicht 6, 10.Je nach Wickelrichtung ist dann im aufgerollten Zustand der Dichtbandrolle 34 oder der Zwischenrolle 36 nach außen hin nur eine oder keine aus erster Sperrschicht 6 und zweiter Sperrschicht 10 zu sehen.

Fig. 5c zeigt eine weitere Möglichkeit der finalen Bearbeitung der Schaumstoff-Sperrschicht-Bahn 32 zur Herstellung von Dichtbandrollen 34. Dabei wird bei dieser Variante die Schaumstoff-Sperrschicht-Bahn 32 mittels eines oder mehrerer Messer 40 oder Sägen im Bereich mindestens eines Schaumstoffstreifens 26 in Längsrichtung durchtrennt. Hierdurch wird mindestens ein Schnitt 42 in die Schaumstoff-Sperrschicht-Bahn 32 eingefügt, wodurch mindestens zwei Schaumstoff-Sperrschicht-Streifen 44 erzeugt werden. Die Schaumstoff-Sperrschicht-Streifen 44 entsprechen dann einem fertigen Dichtelement oder Dichtband. Jeder Schaumstoff-Sperrschicht-Streifen 44 wird dann zu einer Dichtbandrolle 34 aufgewickelt. Auf diese Weise kann der in Fig. 5b dargestellte Schritt des Zerteilens einer Zwischenrolle 36 entfallen.

In allen Ausführungsformen wird die Schaumstoff-Sperrschicht-Bahn 32 bzw. die Schaumstoff-Sperrschicht-Streifen 44 vor dem Aufwickeln zu einer Dichtbandrolle 34 komprimiert. Dies kann entweder durch vorgelagerte Kompressionswalzen geschehen oder durch einen während des Aufwickelns ausgeübten Druck auf die Schaumstoff-Sperrschicht-Bahn 32 bzw. die Schaumstoff-Sperrschicht-Streifen 44. Entsprechende Kompressionswalzen 46 sind beispielsweise in Fig. 5c dargestellt.

Bei allen drei Ausführungsbeispielen nach den Fig. 5a bis 5c kann auf die Schaumstoff-Sperrschicht-Bahn 32 eine Klebeschicht auf einer quer zu den Sperrschichten 6, 10 angeordneten Fläche, vorzugsweise der Unterseite der Schaumstoff-Sperrschicht-Bahn 32 aufgebracht werden. Die Klebeschicht dient dem Verbinden des zur Dichtbandrolle 34 aufgewickelten Dichtelements bzw. Dichtbands mit einem Fenster- oder Türrahmen. Im Ausführungsbeispiel nach Fig. 5c kann das Aufbringen der Klebeschicht auch erst nach dem Bilden der Schaumstoff-Sperrschicht-Streifen 44 auf selbige erfolgen. Die Klebeschicht ist vorzugsweise als ein einseitig mit einer Abziehfolie kaschiertes doppelseitiges Klebeband ausgebildet. Das Klebeband ist wiederum auf einer Spule oder Rolle gelagert und wird von dieser abgezogen. Vorzugsweise erfolgt das Aufbringen des Klebebands auf die Schaumstoff-Sperrschicht-Bahn 32 gleichzeitig mit dem Aufwickeln der Schaumstoff-Sperrschicht-Bahn 32 zur Zwischenrolle 36 oder zur Dichtbandrolle 34, wobei die Kompressionswalzen 46 den Druck zur Verbindung von Klebeband und Schaumstoff-Sperrschicht-Bahn 38 bzw. Schaumstoff-Sperrschicht-Streifen 44 erzeugen.

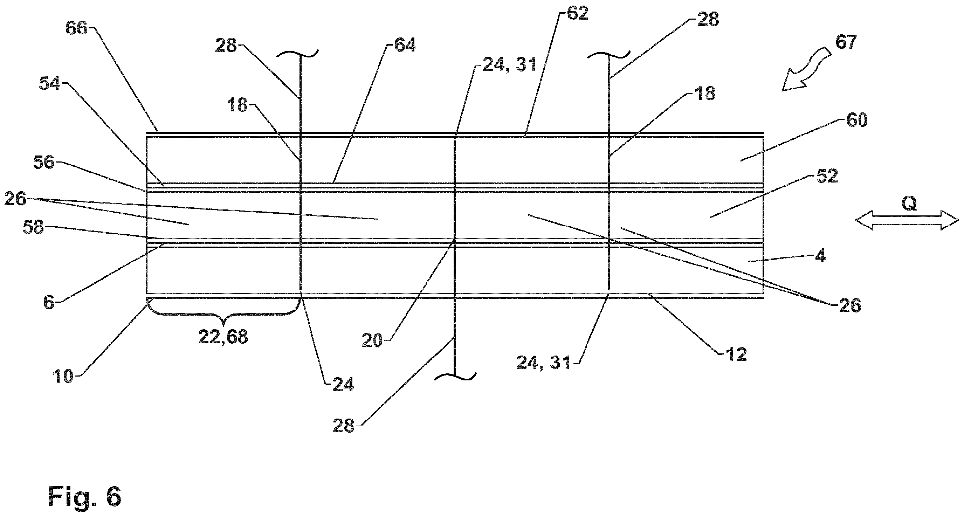

Anhand der Figuren 6 bis 9 ist ein weiteres Ausführungsbeispiel eines Verfahrens zur Herstellung einer alternativen erfindungsgemäßen Dichtbandrolle 34 beschrieben.

Wie in Fig. 6 zu sehen ist, wird zunächst auch in dieser Ausführungsform die Schaumstoffbahn 4, die einer ersten Schaumstoffbahn 4 entspricht, bereitgestellt und die erste Sperrschicht 6 wird auf die erste Fläche 8, hier die Oberseite aufgebracht. Die zweite Sperrschicht 10 wird auf die zweite Fläche 12, hier die Unterseite der ersten Schaumstoffbahn 4 aufgebracht. Anschließend folgen die Schritte des Aufbringens einer zweiten Schaumstoffbahn 52 auf die erste Sperrschicht 6. Vorzugsweise wird eine dritte Sperrschicht 54 auf eine erste Fläche 56 der zweiten Schaumstoffbahn 52 aufgebracht. Die erste Fläche 56 der zweiten Schaumstoffbahn 52 entspricht in diesem Beispiel einer Oberfläche der zweiten Schaumstoffbahn 52, während eine zweite Fläche 58 der zweiten Schaumstoffbahn 52 einer Unterseite derselben entspricht. Die zweite Fläche 58 der zweiten Schaumstoffbahn 52 steht flächig mit der ersten Sperrschicht 6 in Kontakt.

Auf die dritte Sperrschicht 54 kann weiterhin eine dritte Schaumstoffbahn 60 aufgebracht werden. Die dritte Schaumstoffbahn 60 weist eine erste Fläche 62 und eine zweite Fläche 64 auf, wobei hier die erste Fläche 62 einer Oberseite und die zweite Fläche 64 einer Unterseite der dritten Schaumstoffbahn 60 entsprechen. Die zweite Fläche 64 der dritten Schaumstoffbahn 60 steht flächig mit der dritten Sperrschicht 54 in Kontakt. Schließlich wird auf die erste Fläche 62 der dritten Schaumstoffbahn 60 eine vierte Sperrschicht 66 aufgebracht. Jede Sperrschicht 6, 10, 54, 66 ist mit der angrenzenden Schaumstoffbahn bzw. den angrenzenden Schaumstoffbahnen 4, 52, 60, verbunden. Bezüglich der Materialien der Sperrschichten und des Verbindens einer Sperrschicht mit einer Schaumstoffbahn wird auf die Ausführungen zur ersten und zweiten Sperrschicht 6, 10 und zum Verbinden derselben mit der Schaumstoffbahn 4 verwiesen.

Das Aufbringen weiterer Schaumstoffbahnen und Sperrschichten kann beliebig oft wiederholt werden, um einen mehrlagigen Schaumstoffbahn-Sperrschicht-Stapel 67 zu erzeugen, der mindestens zwei Schaumstoffbahnen umfasst. Nach dem Erzeugen des mehrlagigen Schaumstoffbahn-Sperrschicht-Stapels 67 gewünschter Dicke wird das Verfahren gemäß Fig. 6 fortgeführt.

Der Schaumstoff-Sperrschicht-Stapel 67 dieser Ausführungsform entspricht einer mehrlagigen Schaumstoff-Sperrschicht-Bahn 32 der Ausführungsform nach Fig. 2 bis 4. Entsprechend treten an die Stelle der ersten und der zweiten Sperrschicht 6, 10 der ersten Ausführungsform die jeweils außenliegenden Sperrschichten des Schaumstoff-Sperrschicht-Stapels 67, hier die zweite Sperrschicht 10 und die vierte Sperrschicht 66.

Fig. 6 zeigt den Schritt des Einbringens mindestens eines ersten Schnitts 18 und mindestens eines zweiten Schnitts 20 in den mehrlagigen Schaumstoffbahn-Sperrschicht-Stapel 67. Der mindestens eine erste Schnitt 18 wird auch hier in die erste Fläche 8 der ersten Schaumstoffbahn 4 eingebracht und der mindestens eine zweite Schnitt 20 wird auch hier in die zweite Fläche 12 der ersten Schaumstoffbahn 4 eingebracht. Genauer wird der mindestens eine erste Schnitt 18 ausgehend von der ersten Fläche der obersten Schaumstoffbahn, hier der ersten Fläche 62 der dritten Schaumstoffbahn 60, in den Schaumstoffbahn-Sperrschicht-Stapel 67 eingebracht. Der zweite Schnitt 20 wird ausgehend von der zweiten Fläche der untersten Schaumstoffbahn, hier der zweiten Fläche 12 der ersten Schaumstoffbahn 4, in den Schaumstoffbahn-Sperrschicht-Stapel 67 eingebracht. Durch das Einbringen des mindestens einen ersten Schnitts 18 und des mindestens einen zweiten Schnitts 20 in Längsrichtung der Schaumstoffbahnen 4, 52, 60 und in Querrichtung Q versetzt zueinander werden parallel verlaufende Dichtbandabschnitte 68 gebildet. Zwischen zwei aneinander angrenzenden Dichtbandabschnitten 68 verbleibt ein Verbindungsabschnitt 24. Die Dichtbandabschnitte 68 dieser Ausführungsform entsprechen mehrlagigen Dichtbandstreifen 22 der Ausführungsform nach Fig. 2 bis 4.

Es ist ersichtlich, dass das Einbringen des mindestens einen ersten Schnitts 18 und das Einbringen des mindestens einen zweiten Schnitts 20 auf dieselbe Weise erfolgt, wie mit Bezug auf Fig. 2 bezüglich des ersten Ausführungsbeispiels beschrieben ist.

Die Dichtbandabschnitte 68 sind in diesem Ausführungsbeispiel aus mehreren übereinander angeordneten Dichtbandstreifen 22 gebildet. Jeder Dichtbandabschnitt 68 besteht folglich aus einer Mehrzahl von Schaumstoffstreifen 4, 52, 60 und einer Mehrzahl von Sperrschichten 6, 10, 54, 66. Die an einen ersten Schnitt 18 angrenzenden Dichtbandabschnitte 68 sind durch einen Verbindungsabschnitt 24 im Bereich der zweiten Fläche der untersten Schaumstoffbahn, hier der zweiten Fläche 12 der ersten Schaumstoffbahn 4, miteinander verbunden. Die an einen zweiten Schnitt 20 angrenzenden Dichtbandabschnitte 68 sind durch einen Verbindungsabschnitt 24 im Bereich der ersten Fläche der obersten Schaumstoffbahn, hier der ersten Fläche 62 der dritten Schaumstoffbahn 60, miteinander verbunden. Jeder Verbindungsabschnitt 24 kann einen Schaumstoffsteg 31 umfassen oder nur durch die jeweils im Verbindungsabschnitt 24 angeordnete Sperrschicht 6, 66 gebildet sein.

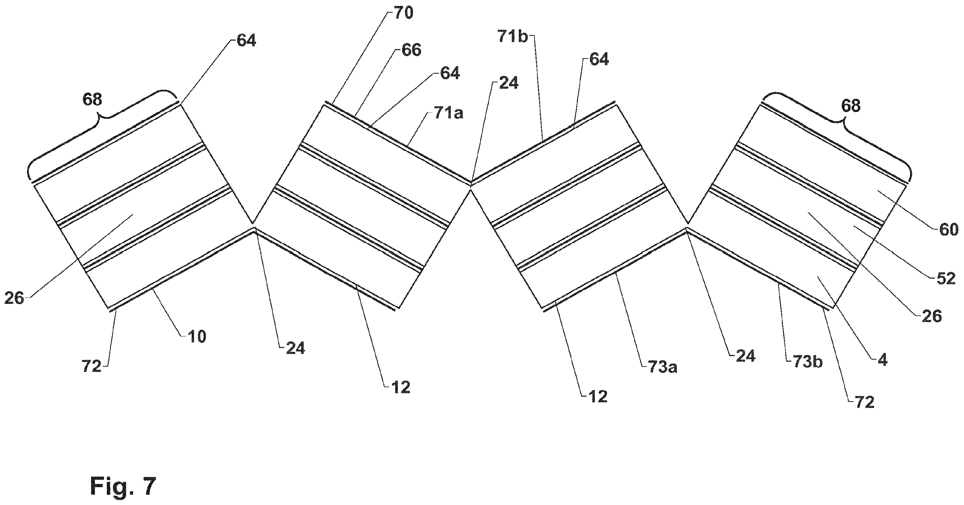

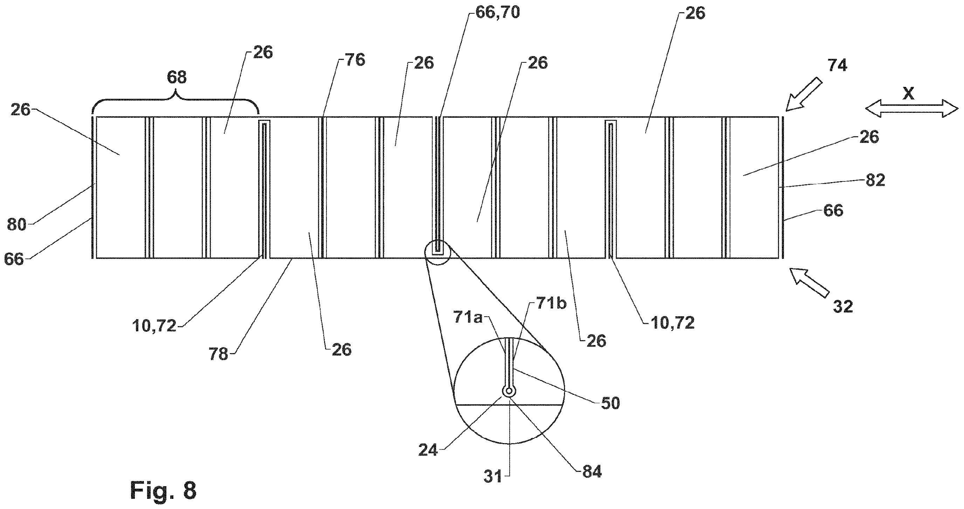

In Fig. 7 ist der Schritt des Umklappens der beim Schneiden erzeugten Dichtbandabschnitte 68 dargestellt. Das Umklappen der Dichtbandabschnitte 68 erfolgt im Bereich der Verbindungsabschnitte 24 zur Herstellung einer Schaumstoff-Sperrschicht-Bahn 32, wie sie in Fig. 8 dargestellt ist. Das heißt, dass auch hier die Dichtbandstreifen 22, aus denen ein jeder Dichtbandabschnitt 68 gebildet ist, im Bereich der Verbindungsabschnitte 24 umgeklappt werden.

Die Dichtbandabschnitte 68 werden derart umgeklappt, dass sich Teilabschnitte der zweiten Fläche 12 der untersten Schaumstoffbahn 4, die jeweils an einen gemeinsamen Verbindungsabschnitt 24 angrenzen, gegenüberliegen und sich Teilabschnitte der ersten Fläche 62 der obersten Schaumstoffbahn 60, die jeweils an einen gemeinsamen Verbindungsabschnitt 24 angrenzen, gegenüberliegen. Im Übrigen treffen auch hier die Ausführungen zu Fig. 3 mit dem Unterschied zu, dass anstelle eines Dichtbandstreifens 22 ein mehrlagiger Dichtbandabschnitt 68 tritt.

Der mindestens eine erste Schnitt 18 teilt in diesem Ausführungsbeispiel die im Bereich der ersten Fläche der obersten Schaumstoffbahn, hier der ersten Fläche 62 der dritten Schaumstoffbahn 60, an einen gemeinsamen Verbindungsabschnitt 24 angrenzende Sperrschicht 66 in eine Mehrzahl von Teilabschnitten der Sperrschicht 66. Jeder der Mehrzahl dieser Teilabschnitte bildet jeweils einen ersten Sperrschichtabschnitt 70, der nach dem Umklappen der Dichtbandabschnitte 68 zwischen zwei aneinander angrenzenden Dichtbandabschnitten 68 aufgenommen ist.

Der mindestens eine zweite Schnitt 20 teilt in diesem Ausführungsbeispiel die im Bereich der zweiten Fläche der untersten Schaumstoffbahn, hier der zweiten Fläche 12 der ersten Schaumstoffbahn 4, an einen gemeinsamen Verbindungsabschnitt 24 angrenzende Sperrschicht 10 in eine Mehrzahl von Teilabschnitten der Sperrschicht 10. Jeder der Mehrzahl dieser Teilabschnitte bildet jeweils einen zweiten Sperrschichtabschnitt 72, der nach dem Umklappen der Dichtbandabschnitte 68 zwischen zwei aneinander angrenzenden Dichtbandabschnitten 68 aufgenommen ist.

Es ist ersichtlich, dass bei der Ausführungsform nach Fig. 2 bis 4 der mindestens eine erste Sperrschichtabschnitt 70 einem Teilabschnitt der ersten Sperrschicht 6 und der mindestens eine zweite Sperrschichtabschnitt 72 einem Teilabschnitt der zweiten Sperrschicht 10 entspricht.

In Fig. 7 ist besonders gut zu erkennen, dass der mindestens eine erste Sperrschichtabschnitt 70 zwei Schenkel 71a, 71b aufweist, die miteinander verbunden sind. Die Schenkel 71a, 71b ergeben sich insbesondere durch das Umklappen der Dichtbandabschnitte 68 entlang der Verbindungsabschnitte 24. Die Schenkel 71a, 71b des ersten Dichtbandabschnitts 70 sind daher im Bereich des jeweils angrenzenden Verbindungsabschnitts 24 miteinander verbunden. Auch der mindestens eine zweite Sperrschichtabschnitt 72 weist zwei Schenkel 73a, 71b auf. Die Schenkel 73a, 71b eines zweiten Sperrschichtabschnitts 72 sind im Bereich eines jeweils angrenzenden Verbindungsabschnitts 24 miteinander verbunden. Die Schenkel 71a, 71b des mindestens einen ersten Sperrschichtabschnitts 70 sind im Bereich einer Unterseite 78 der Schaumstoff-Sperrschicht-Bahn 32 miteinander verbunden und die Schenkel 73a, 71b des mindestens einen zweiten Sperrschichtabschnitts 72 sind im Bereich einer Oberseite 76 der Schaumstoff-Sperrschicht-Bahn 32 miteinander verbunden. Weist die Schaumstoff-Sperrschicht-Bahn 32 mehrere erste Sperrschichtabschnitte 70 und/oder mehrere zweite Sperrschichtabschnitte 72 auf, wechseln sich in Funktionsrichtung X betrachtet immer ein erster Sperrschichtabschnitt 70 und ein zweiter Sperrschichtabschnitt 72 ab.

Die Schenkel 71a, 71b, 73a, 71b sind durch die Sperrschichtabschnitte 70, 72 gebildet, wobei sowohl der erste als auch der zweite Sperrschichtabschnitt 70, 72 jeweils mit den Schaumstoffstreifen 26 angrenzender Dichtbandabschnitte 68 verbunden sind. Die Schenkel 71a, 71b, 73a, 71b des mindestens einen ersten und mindestens einen zweiten Sperrschichtabschnitts 70, 72 liegen daher flächig an den jeweils angrenzenden Schaumstoffstreifen 26 an.

Durch das Umklappen der Dichtbandabschnitte 68 entlang der Verbindungsabschnitte 24 werden der mindestens eine erste und der mindestens eine zweite Sperrschichtabschnitt 70, 72 im Bereich der jeweils angrenzenden Verbindungsabschnitte 24 gekrümmt. Die zwei Schenkel 71a, 71b, 73a, 71b eines Sperrschichtabschnitts 70, 72 sind dann vorzugsweise durch eine Krümmung des jeweiligen Sperrschichtabschnitts 70, 72 verbunden. Die Krümmung kann aber auch aus einem anderen streifenförmigen Material gebildet sein, das beidseitig mit den jeweiligen Schenkeln 71a, 71b, 73a, 71b verbunden ist. Die Krümmung kann U-förmig oder V-förmig ausgebildet sein oder eine andere geometrische Form aufweisen. Die Schenkel 71a, 71b, 73a, 71b und die Krümmung können z.B. eine Schlaufe bilden. Zwei Schenkel 71a, 71b, 73a, 71b eines Sperrschichtabschnitts 70, 72 sind vorzugsweise integral ausgebildet. Insbesondere ist es bevorzugt, dass zwei Schenkel 71a, 71b, 73a, 71b eines Sperrschichtabschnitts 70, 72 jeweils durch einen Teil des jeweiligen Sperrschichtabschnitts 70, 72 miteinander verbunden sind. Nach dem Umklappen verlaufen die Schenkel 71a, 71b, 73a, 71b eines Sperrschichtabschnitts 70, 72 im Wesentlichen parallel zu einander.

Fig. 8 zeigt die durch Umklappen gemäß Fig. 7 erzeugte Schaumstoff-Sperrschicht-Bahn 32, die aus einer Mehrzahl von nebeneinander angeordneten Dichtbandabschnitten 68 besteht. Wie zu erkennen ist, bilden der mindestens eine erste Sperrschichtabschnitt 70 und der mindestens eine zweite Sperrschichtabschnitt 72 nun Sperrschichten, die zwischen zwei aneinander angrenzenden Dichtbandabschnitten 68 aufgenommen sind, im Wesentlichen senkrecht zur Unterseite der Schaumstoff-Sperrschicht-Bahn 32 ausgerichtet sind und sich über einen Großteil der Höhe der Schaumstoff-Sperrschicht-Bahn 32 zwischen deren Oberseite und Unterseite erstrecken. Zudem beinhaltet jeder Dichtbandabschnitt 68 noch weitere Sperrschichten, die aus den umgeklappten Teilabschnitten der ersten und dritten Sperrschicht 6, 54 bestehen. Da die Sperrschichtabschnitte der ersten und dritten Sperrschicht 6, 54 nicht durch Umklappen gefaltet wurden, erstrecken sie sich einlagig innerhalb eines Dichtbandabschnitts 68 von der Oberseite 76 zur Unterseite 78.

Es ist bevorzugt, dass die Dichtbandabschnitte 68 entsprechend den Dichtbandstreifen 22 der Ausführungsform nach Fig. 4 nach dem Umklappen durch Verhaften bzw. Verschmelzen der aneinander angrenzenden Schenkel der Sperrschichtabschnitte miteinander verbunden werden. Vorzugsweise werden die Dichtbandabschnitte 68 dazu vor dem Umklappen, alternativ auch erst nach dem Umklappen erwärmt.

Analog zu den Fig. 5a bis 5c kann auch aus der Schaumstoff-Sperrschicht-Bahn 32 nach Fig. 8 mindestens eine Dichtbandrolle 34 gebildet werden.

Die Schaumstoff-Sperrschicht-Bahn 32 kann bereits einem Dichtelement oder Dichtband entsprechen und unmittelbar zu einer Dichtbandrolle 34 aufgewickelt werden. Die Schaumstoff-Sperrschicht-Bahn 32 kann auch zu einer Zwischenrolle 36 aufgewickelt werden, die an mehreren Stellen in axialer Richtung zur Bildung einer Mehrzahl von Dichtbandrollen 34 durchtrennt wird, oder durch Einbringen mindestens eines Schnitts 42 in die Schaumstoff-Sperrschicht-Bahn 32 in eine Mehrzahl von das Dichtelement bildenden Schaumstoff-Sperrschicht-Streifen 44 getrennt werden, die anschließend zu einzelnen Dichtbandrollen 34 aufgewickelt werden. Details zur Herstellung von Dichtbandrollen 34 aus der Schaumstoff-Sperrschicht-Bahn 32 sind der Beschreibung zu den Fig. 5a bis 5c zu entnehmen.

Schließlich wird unter Bezugnahme auf die Fig. 4 und 8 ein erfindungsgemäß hergestelltes Dichtelement 74 beschrieben. Das Dichtelement kann ein zu einer Dichtbandrolle 34 aus weichem, komprimierbarem Schaumstoff mit mindestens einer in radialer Richtung verlaufenden Sperrschicht aufzurollendes Dichtband sein. Das Dichtelement kann aber auch die Schaumstoff-Sperrschicht-Bahn 32 oder ein von der Schaumstoff-Sperrschicht-Bahn 32 abgetrennter Streifen 44 sein, aus denen im weiteren Verlauf eine Dichtbandrolle 34 gebildet wird.

Das Dichtelement 74 aus Weichschaum weist eine Oberseite 70, eine Unterseite 78 und zwei die Oberseite 76 und die Unterseite 78 verbindende Seitenflanken 80, 82 auf. Ferner umfasst das Dichtelement 74 mindestens drei Dichtbandabschnitte 68. Die Dichtbandabschnitte 68 können jeweils einen oder mehrere Dichtbandstreifen 22 umfassen. Die Dichtbandabschnitte 68 sind in einer Funktionsrichtung X des Dichtelements 74 nebeneinander angeordnet. Die Funktionsrichtung X ist parallel zu der Unterseite 78 sowie vorzugsweise senkrecht zu den Seitenflanken 80, 82 ausgerichtet und in Fig. 8 durch den Pfeil X gekennzeichnet.

Mindestens ein erster Sperrschichtabschnitt 70 und mindestens ein zweiter Sperrschichtabschnitt 72 sind jeweils zwischen zwei aneinander angrenzenden Dichtbandabschnitten 68 aufgenommen. Der mindestens eine erste Sperrschichtabschnitt 70 und der mindestens eine zweite Sperrschichtabschnitt 72 verbinden die jeweils angrenzenden Dichtbandabschnitte 68 zumindest mittels der die Schenkel 71a, 71b, 73a, 73b des jeweiligen Sperrschichtabschnitts 70, 72 verbindenden Krümmung miteinander und verlaufen parallel zu den Seitenflanken 80, 82 im Dichtelement 74. Umfassen die Dichtbandabschnitte 68 jeweils mehrere Dichtbandstreifen 22, sind in jedem Dichtbandabschnitt 68 zudem weitere parallel zu den Seitenflanken 80, 82 verlaufende Sperrschichtabschnitte der ersten und dritten Sperrschicht 6, 54 aufgenommen, die sich bevorzugt vollständig durch das Dichtelement 74 hindurch erstrecken.

In einem Einbauzustand, in dem das Dichtelement 74 in eine Fuge zwischen einem Rahmenelement und einem Mauerwerk aufgenommen ist, liegen die Oberseite 76 und die Unterseite 78 an den eine Fuge bildenden gegenüberliegenden Oberflächen des Rahmenelements und des Mauerwerks an. Die Sperrschichtabschnitte 70, 72 erstrecken sich quer durch die Fuge vom Rahmenelement zum Mauerwerk. Die Funktionsrichtung X des Dichtelements 74 ist von einer Rauminnenseite zu einer Raumaußenseite parallel zu den der Fuge zugewandten Flächen des Rahmenelements und des Mauerwerks sowie senkrecht zu den Ebenen des ersten Sperrschichtabschnitts 70 und des zweiten Sperrschichtabschnitts 72 ausgerichtet ist. Eine Wasserdampfdiffusion zwischen der Rauminnenseite und der Raumaußenseite durch das Dichtelement ist wird daher durch die Sperrschichtabschnitte 70, 72 entscheidend beeinflusst.

Zum Anbringen des Dichtelements 74 am Rahmenelement kann das Dichtelement 74 mit einer Klebeschicht ausgestattet sein. Die Klebeschicht ist bevorzugt auf die Unterseite 78 des Dichtelements 74 aufgebracht. Die Klebeschicht kann durch ein doppelseitigen Klebeband oder einen sonstigen flüssigen oder Zähflüssigen Klebstoff gebildet werden. Alternativ ist die Klebeschicht auf die Oberseite 76 des Dichtelements 74 aufgebracht und/oder dient der Verbindung des Dichtelements 74 mit dem Mauerwerk.

Die Schenkel 71a, 71b, 73a, 71b sowie die Krümmung des mindestens einen ersten Sperrschichtabschnitts 70 und des mindestens einen zweiten Sperrschichtabschnitts 72 bilden in einer Ausführungsform jeweils eine Schlaufe 50 zwischen den angrenzenden Dichtbandabschnitten 68. Der mindestens eine erste Sperrschichtabschnitt 70 bildet die Schlaufe 50 im Bereich der Unterseite 78 des Dichtelements 74 und der mindestens eine zweite Sperrschichtabschnitt 72 bildet die Schlaufe 50 im Bereich der Oberseite 76 des Dichtelements 74. Weist das Dichtelement 74 mehrere erste Sperrschichtabschnitte 70 und/oder mehrere zweite Sperrschichtabschnitte 72 auf, wechseln sich in Funktionsrichtung X betrachtet immer ein erster Sperrschichtabschnitt 70 und ein zweiter Sperrschichtabschnitt 72 ab. Dies liegt darin begründet, dass vorzugsweise auch der mindestens eine erste Schnitt 18 und der mindestens eine zweite Schnitt 20 in Querrichtung Q der Schaumstoffbahn 4 abwechselnd eingebracht sind.

Die Schlaufe 50 wird durch das Umklappen der Dichtbandabschnitte 68 und dem damit einhergehenden Umklappen der Sperrschichtabschnitte 70, 72 gebildet. Jede Schlaufe 50 weist die zwei im Wesentlichen parallel verlaufende Schenkel 71a, 71b, 73a, 71b und die die Schenkel verbindende Krümmung 84 auf. Die Schenkel 71a, 71b, 73a, 71b der Schlaufe 50 werden durch die Teilabschnitte des ersten bzw. zweiten Sperrschichtabschnitts 70, 72 gebildet, die flächig an dem jeweils angrenzenden Schaumstoffstreifen 26 anliegen. Im Bereich des Verbindungsabschnitts 24 bilden die Sperrschichtabschnitte 70, 72 nach dem Umklappen der Dichtbandabschnitte 68 die Krümmung 84, sodass die zwei Schenkel 71a, 71b, 73a, 71b der Schlaufe 50 aneinander zu liegen kommen.

Zur Verbindung zweier aneinander angrenzender Dichtbandabschnitte 68 sind die zwei Schenkel 71a, 71b, 73a, 71b jeder Schlaufe 50 vorzugsweise miteinander zumindest abschnittsweise verhaftet. Es ist bevorzugt, dass die Schenkel der Schlaufe 50 möglichst vollflächig miteinander verhaftet sind. Eine teilweise Verhaftung kann jedoch zur Verbindung der Dichtbandabschnitte 68 ausreichen. Wird ausreichend Druck in Funktionsrichtung X auf die Schaumstoff-Sperrschicht-Bahn 32 ausgeübt, kann die Schlaufe 50 auch im Bereich der Krümmung 84 verhaftet sein.

Es versteht sich, dass die vorherigen Aussagen auch zutreffen können, wenn die Schenkel 71a, 71b, 73a, 71b sowie die Krümmung 84 des mindestens einen ersten Sperrschichtabschnitts 70 und des mindestens einen zweiten Sperrschichtabschnitts 72 keine Schlaufe 50 bilden sondern eine abweichende Gestalt aufweisen.

Zur Bildung des Dichtelements 74 ist es besonders bevorzugt, dass der mindestens eine erste Sperrschichtabschnitt 70 und der mindestens eine zweite Sperrschichtabschnitt 72 eine Folie aufweisen. Mögliche Materialien einer Sperrschicht sind bereits unter Bezugnahme auf die Materialien der ersten und der zweiten Sperrschicht 6, 10 beschrieben.

Aus den obigen Ausführungen ist ersichtlich, dass der strukturelle Unterschied der hierin beschriebenen Ausführungsformen im Wesentlichen darin liegt, dass in der ersten Ausführungsform nur eine Schaumstoffbahn verwendet wird, während in der zweiten Ausführungsform eine Mehrzahl von Schaumstoffbahnen verwendet wird. Abgesehen von den sich daraus ergebenden Besonderheiten sind die Ausführungsformen insbesondere was ihre Eigenschaften bzw. die Eigenschaften und Merkmale der herzustellenden Dichtbandrolle betrifft im Wesentlichen identisch. Merkmale der verschiedenen Ausführungsformen können daher ohne weiteres miteinander kombiniert werden.

## Patentansprüche

1. Dichtbandrolle (34) aus weichem, komprimierbarem Schaumstoff mit mindestens zwei in radialer Richtung verlaufenden Sperrschichten, die axial zwischen zwei Schichten aus Schaumstoff angeordnet sind, wobei die Dichtbandrolle (34) aus einem zur Dichtbandrolle (34) aufgewickelten Dichtelement (74) besteht, das umfasst:
eine Oberseite (76), eine Unterseite (78) und zwei die Oberseite (76) und die Unterseite (78) verbindende Seitenflanken (80, 82);
mindestens drei Dichtbandabschnitte (68), die in einer Funktionsrichtung (X) des Dichtelements (74) nebeneinander angeordnet sind, wobei sich die Funktionsrichtung (X) parallel zur Unterseite (78) sowie senkrecht zu den Seitenflanken (80, 82) erstreckt;
mindestens einen ersten Sperrschichtabschnitt (70) und mindestens einen zweiten Sperrschichtabschnitt (72), die jeweils zwischen zwei aneinander angrenzenden Dichtbandabschnitten (68) aufgenommen sind und parallel zu den Seitenflanken (80, 82) im Dichtelement (74) verlaufen;
wobei der mindestens eine erste Sperrschichtabschnitt (70) zwei Schenkel (71a, 71b) aufweist und der mindestens eine zweite Sperrschichtabschnitt (72) zwei Schenkel (73a, 73b) aufweist;
**dadurch gekennzeichnet, dass**
die Schenkel (71a, 71b) des mindestens einen ersten Sperrschichtabschnitts (70) im Bereich der Unterseite (78) des Dichtelements (74) miteinander verbunden sind und die Schenkel (73a, 73b) des mindestens einen zweiten Sperrschichtabschnitts (72) im Bereich der Oberseite (76) des Dichtelements (74) miteinander verbunden sind; und
die zwei Schenkel (71a, 71b, 73a, 73b) eines ersten bzw. eines zweiten Sperrschichtabschnitts (70, 72) abschnittsweise miteinander verhaftet sind.

2. Dichtbandrolle (34) nach Anspruch 1, **dadurch gekennzeichnet, dass** das Dichtelement (74) mehrere erste und/oder mehrere zweite Sperrschichtabschnitte (70, 72) aufweist, wobei sich in Funktionsrichtung (X) betrachtet immer ein erster Sperrschichtabschnitt (70) und ein zweiter Sperrschichtabschnitt (72) abwechseln.

3. Dichtbandrolle (34) nach Anspruch 1 oder 2, **dadurch gekennzeichnet, dass** der mindestens eine erste Sperrschichtabschnitt (70) und der mindestens eine zweite Sperrschichtabschnitt (72) eine Folie aufweisen.

4. Dichtbandrolle (34) nach einem der vorangehenden Ansprüche, **dadurch gekennzeichnet, dass** die Schenkel (71a, 71b) des mindestens einen ersten Sperrschichtabschnitts (70) und die Schenkel (73a, 73b) des mindestens einen zweiten Sperrschichtabschnitts (72) jeweils im Wesentlichen parallel verlaufen und zwei Schenkel (71a, 71b, 73a, 73b) eines Sperrschichtabschnitts (70, 72) eine die Schenkel (71a, 71b, 73a, 73b) verbindende Krümmung (84) aufweisen.

5. Dichtbandrolle (34) nach Anspruch 4, **dadurch gekennzeichnet, dass** die Krümmung (84) U- oder V-förmig ausgebildet ist.

6. Dichtbandrolle (34) nach einem der vorangehenden Ansprüche, **dadurch gekennzeichnet, dass** die Schenkel (71a, 71b) des mindestens einen ersten Sperrschichtabschnitts (70) integral ausgebildet sind und die Schenkel (73a, 73b) des mindestens einen zweiten Sperrschichtabschnitts (72) integral ausgebildet sind.

7. Dichtbandrolle (34) nach einem der vorangehenden Ansprüche, **dadurch gekennzeichnet, dass** die Schenkel (71a, 71b, 73a, 73b) des mindestens einen ersten und des mindestens einen zweiten Sperrschichtabschnitts (70, 72) an einem an den jeweiligen Schenkel (71a, 71b, 73a, 73b) angrenzenden Schaumstoffstreifen (26) flächig anliegen.

8. Dichtbandrolle (34) nach einem der vorangehenden Ansprüche, **dadurch gekennzeichnet, dass** innerhalb jedes Dichtbandabschnitts (68) mindestens ein weiterer Sperrschichtabschnitt (6, 54) aufgenommen ist, der parallel zu den Seitenflanken (80, 82) verläuft.

9. Dichtbandrolle (34) nach einem der vorangehenden Ansprüche, **dadurch gekennzeichnet, dass** zwei aneinander angrenzende Dichtbandabschnitte (68) des Dichtelements (74) durch einen Verbindungsabschnitt (24) miteinander verbunden sind.

10. Dichtbandrolle (34) nach Anspruch 9, **dadurch gekennzeichnet, dass** der Verbindungabschnitt (24) den mindestens eine ersten Sperrschichtabschnitt (70) oder den mindestens einen zweiten Sperrschichtabschnitt (72) umfasst.

11. Dichtbandrolle (34) nach Anspruch 9 oder 10, **dadurch gekennzeichnet, dass** der Verbindungsabschnitt (24) einen Schaumstoffsteg (31) umfasst.

12. Dichtbandrolle (34) nach Anspruch 11, **dadurch gekennzeichnet, dass** der Schaumstoffsteg (31) eine Höhe von maximal 10 mm, mehr bevorzugt von maximal 5 mm und noch mehr bevorzugt von maximal 1 bis 2 mm aufweist.

13. Dichtbandrolle (34) nach einem der vorangehenden Ansprüche, **dadurch gekennzeichnet, dass** die Unterseite (78) des Dichtelements (74) eine Klebeschicht zur Verbindung des Dichtelements (74) mit einem Rahmenelement aufweist.

14. Dichtbandrolle (34) nach einem der vorangehenden Ansprüche, **dadurch gekennzeichnet, dass** das Dichtelement (74) um eine Achse, die sich parallel zur Funktionsrichtung (X) erstreckt, derart zur Dichtbandrolle (34) aufgewickelt ist, dass die Oberseite einer Windung an der Unterseite einer angrenzenden Windung der Dichtbandrolle anliegt und die Seitenflanken (80, 82) des Dichtelements (74) Stirnflächen der Dichtbandrolle (34) bilden.

## Claims

1. A sealing tape roll (34) made of soft, compressible foam with at least two barrier layers which extend in the radial direction and are arranged axially between two layers of foam, wherein the sealing tape roll (34) consists of a sealing element (74) wound up to form the sealing tape roll (34), said sealing element comprising:
a top side (76), a bottom side (78) and two side flanks (80, 82) connecting the top side (76) and the bottom side (78);
at least three sealing-tape portions (68), which are arranged next to one another in a functional direction (X) of the sealing element (74), wherein the functionial direction (X) extends parallel to the bottom side (78) and perpendicular to the side flanks (80, 82);
at least one first barrier-layer portion (70) and at least one second barrier-layer portion (72), each of which are accommodated between two sealing-tape portions (68) adjoining one another and extend parallel to the side flanks (80, 82) in the sealing element (74);
wherein the at least one first barrier-layer portion (70) has two limbs (71a, 71b) and the at least one second barrier-layer portion (72) has two limbs (73a, 73b) ;
**characterized in that**
the limbs (71a, 71b) of the at least one first barrier-layer portion (70) are connected to one another in the region of the bottom side (78) of the sealing element (74), and the limbs (73a, 73b) of the at least one second barrier-layer portion (72) are connected to one another in the region of the top side (76) of the sealing element (74), and
the two limbs (71a, 71b, 73a, 73b) of a first and/or of a second barrier-layer portion (70, 72) are bonded to one another in certain portions.

2. The sealing tape roll (34) according to claim 1, **characterized in that** the sealing element (74) comprises a plurality of first and/or a plurality of second barrier-layer portions (70, 72), wherein, when viewed in the functional direction (X), a first barrier-layer portion (70) and a second barrier-layer portion (72) always alternate.

3. The sealing tape roll (34) according to claim 1 or 2, **characterized in that** the at least one first barrier-layer portion (70) and the at least one second barrier-layer portion (72) comprise a film.

4. The sealing tape roll (34) according to one of the preceding claims, **characterized in that** the limbs (71a, 71b) of the at least one first barrier-layer portion (70) and the limbs (73a, 73b) of the at least one second barrier-layer portion (72) in each case extend substantially parallel and two limbs (71a, 71b, 73a, 73b) of a barrier-layer portion (70, 72) have a bent portion (84) which connects the limbs (71a, 71b, 73a, 73b).

5. The sealing tape roll (34) according to claim 4, **characterized in that** the bent portion (84) has a U-shaped or V-shaped form.

6. The sealing tape roll (34) according to one of the preceding claims, **characterized in that** the limbs (71a, 71b) of the at least one first barrier-layer portion (70) are formed integrally and the limbs (73a, 73b) of the at least one second barrier-layer portion (72) are formed integrally.

7. The sealing tape roll (34) according to one of the preceding claims, **characterized in that** the limbs (71a, 71b, 73a, 73b) of the at least one first and the at least one second barrier-layer portion (70, 72) bear flat against a foam strip (26) adjoining the respective limb (71a, 71b, 73a, 73b).

8. The sealing tape roll (34) according to one of the preceding claims, **characterized in that** accommodated within each sealing-tape portion (68) is at least one further barrier-layer portion (6, 54), which runs parallel to the side flanks (80, 82).

9. The sealing tape roll (34) according to one of the preceding claims, **characterized in that** two sealing-tape portions (68) of the sealing element (74) that adjoin one another are connected to one another by a connecting portion (24).

10. The sealing tape roll (34) according to claim 9, **characterized in that** the connecting portion (24) comprises the at least one first barrier-layer portion (70) or the at least one second barrier-layer portion (72).

11. The sealing tape roll (34) according to claim 9 or 10, **characterized in that** the connecting portion (24) comprises a foam web (31).

12. The sealing tape roll (34) according to claim 11, **characterized in that** the foam web (31) has a height of at most 10 mm, more preferably of at most 5 mm and even more preferably of at most 1 to 2 mm.

13. The sealing tape roll (34) according to one of the preceding claims, **characterized in that** the bottom side (78) of the sealing element (74) has an adhesive layer for connecting the sealing element (74) to a frame element.

14. The sealing tape roll (34) according to one of the preceding claims, **characterized in that** the sealing element (74) is wound up around an axis extending parallel to the functional direction (X) to form a sealing tape roll (34) in such a way that the top surface of a winding bears against the bottom side of an adjoining winding of the sealing tape roll and the side flanks (80, 82) of the sealing element (74) form end faces of the sealing tape roll (34).

## Revendications

1. Rouleau de bande d'étanchéité (34) composé d'une mousse compressible souple avec au moins deux couches formant barrière s'étendant dans un sens radial, qui sont disposées de manière axiale entre deux couches composées de mousse, rouleau de bande d'étanchéité (34) constitué d'un élément d'étanchéité (74) enroulé pour former le rouleau de bande d'étanchéité (34), qui comprend :
un côté supérieur (76), un côté inférieur (78) et deux flancs latéraux (80, 82) reliant le côté supérieur (76) et le côté inférieur (78),
au moins trois portions de bande d'étanchéité (68), qui sont disposées côte à côte dans un sens fonctionnel (X) de l'élément d'étanchéité (74), dans lequel le sens fonctionnel (X) s'étend de manière parallèle par rapport au côté inférieur (78) ainsi que de manière perpendiculaire par rapport aux flancs latéraux (80, 82),
au moins une première portion de couche formant barrière (70) et au moins une deuxième portion de couche formant barrière (72), qui sont logées respectivement entre deux portions de bande d'étanchéité (68) se jouxtant l'une l'autre et qui s'étendent de manière parallèle par rapport aux flancs latéraux (80, 82) dans l'élément d'étanchéité (74),
dans lequel l'au moins une première portion de couche formant barrière (70) présente deux branches (71a, 71b) et l'au moins une deuxième portion de couche formant barrière (72) présente deux branches (73a, 73b),
**caractérisé en ce que**
les branches (71a, 71b) de l'au moins une première portion de couche formant barrière (70) sont reliées l'une à l'autre dans la zone du côté inférieur (78) de l'élément d'étanchéité (74) et les branches (73a, 73b) de l'au moins une deuxième portion de couche formant barrière (72) sont reliées l'une à l'autre dans la zone du côté supérieur (76) de l'élément d'étanchéité (74), et
les deux branches (71a, 71b, 73a, 73b) d'une première et/ou d'une deuxième portion de couche formant barrière (70, 72) adhèrent l'une à l'autre par endroits.

2. Rouleau de bande d'étanchéité (34) selon la revendication 1, **caractérisé en ce que** l'élément d'étanchéité (74) présente plusieurs premières et/ou plusieurs deuxièmes portions de couche formant barrière (70, 72), dans lequel, observées dans un sens fonctionnel (X), une première portion de couche formant barrière (70) et une deuxième portion de couche formant barrière (72) alternent systématiquement.

3. Rouleau de bande d'étanchéité (34) selon la revendication 1 ou 2, **caractérisé en ce que** l'au moins une première portion de couche formant barrière (70) et l'au moins une deuxième portion de couche formant barrière (72) présentent un film.

4. Rouleau de bande d'étanchéité (34) selon l'une quelconque des revendications précédentes, **caractérisé en ce que** les branches (71a, 71b) de l'au moins une première portion de couche formant barrière (70) et les branches (73a, 73b) de l'au moins une deuxième portion de couche formant barrière (72) s'étendent respectivement de manière sensiblement parallèle et deux branches (71a, 71b, 73a, 73b) d'une portion de couche formant barrière (70, 72) présentent une incurvation (84) reliant les branches (71a, 71b, 73a, 73b).

5. Rouleau de bande d'étanchéité (34) selon la revendication 4, **caractérisé en ce que** l'incurvation (84) est réalisée en forme de U ou en forme de V.

6. Rouleau de bande d'étanchéité (34) selon l'une quelconque des revendications précédentes, **caractérisé en ce que** les branches (71a, 71b) de l'au moins une portion de couche formant barrière (70) sont réalisées de manière intégrale et les branches (73a, 73b) de l'au moins une deuxième portion de couche formant barrière (72) sont réalisées de manière intégrale.

7. Rouleau de bande d'étanchéité (34) selon l'une quelconque des revendications précédentes, **caractérisé en ce que** les branches (71a, 71b, 73a, 73b) de l'au moins une première et de l'au moins une deuxième portion de couche formant barrière (70, 72) reposent à plat sur un ruban de mousse (26) jouxtant la branche (71a, 71b, 73a, 73b) respective.

8. Rouleau de bande d'étanchéité (34) selon l'une quelconque des revendications précédentes, **caractérisé en ce qu'**au moins une autre portion de couche formant barrière (6, 54) qui s'étend de manière parallèle par rapport aux flancs latéraux (80, 82) est logée à l'intérieur de chaque portion de bande d'étanchéité (68).

9. Rouleau de bande d'étanchéité (34) selon l'une quelconque des revendications précédentes, **caractérisé en ce que** deux portions de bande d'étanchéité (68) se jouxtant l'une l'autre de l'élément d'étanchéité (74) sont reliées l'une à l'autre par une portion de liaison (24).

10. Rouleau de bande d'étanchéité (34) selon la revendication 9, **caractérisé en ce que** la portion de liaison (24) comprend l'au moins une première portion de couche formant barrière (70) ou l'au moins une deuxième portion de couche formant barrière (72).

11. Rouleau de bande d'étanchéité (34) selon la revendication 9 ou 10, **caractérisé en ce que** la portion de liaison (24) comprend une entretoise en mousse (31).

12. Rouleau de bande d'étanchéité (34) selon la revendication 11, **caractérisé en ce que** l'entretoise en mousse (31) présente une hauteur au maximum de 10 mm, de manière plus préférée au maximum de 5 mm et de manière encore plus préférée au maximum de 1 à 2 mm.

13. Rouleau de bande d'étanchéité (34) selon l'une quelconque des revendications précédentes, **caractérisé en ce que** le côté inférieur (78) de l'élément d'étanchéité (74) présente une couche de colle pour relier l'élément d'étanchéité (74) à un élément de cadre.

14. Rouleau de bande d'étanchéité (34) selon l'une quelconque des revendications précédentes, **caractérisé en ce que** l'élément d'étanchéité (74) est enroulé autour d'un axe, qui s'étend de manière parallèle par rapport au sens fonctionnel (X), pour former le rouleau de bande d'étanchéité (34) de telle manière que le côté supérieur d'une spire repose sur le côté inférieur d'une spire qui jouxte du rouleau de bande d'étanchéité et que les flancs latéraux (80, 82) de l'élément d'étanchéité (74) forment des faces frontales du rouleau de bande d'étanchéité (34).
